(19) Europäisches Patentamt
European Patent Office
Office européen des brevets

(11) Veröffentlichungsnummer: **0 002 439**
**B1**

(12) # EUROPÄISCHE PATENTSCHRIFT

(45) Veröffentlichungstag der Patentschrift: 12.01.83

(21) Anmeldenummer: 78101083.0

(22) Anmeldetag: 06.10.78

(51) Int. Cl.³: C 08 F 8/30, C 08 F 20/36, C 08 F 16/14, G 03 C 1/71

(54) **Unter der Einwirkung von Licht vernetzbare Polymere mit seitenständigen Azidophthalimidylgruppen, Verfahren zur Herstellung derselben und ihre photochemische Anwendung.**

(30) Priorität: 14.10.77 CH 12578/77

(43) Veröffentlichungstag der Anmeldung: 27.06.79 Patentblatt 79/13

(45) Bekanntmachung des Hinweises auf die Patenterteilung: 12.01.83 Patentblatt 83/2

(84) Benannte Vertragsstaaten: CH DE FR GB NL SE

(56) Entgegenhaltungen:
GB - A - 843 541
US - A - 3 002 003

JOURNAL OF APPLIED POLYMER SCIENCE vol. 7, 1963 ST. H. MERRILL et al "Photosensitive Azide Polymers" Seiten 273 bis 279

(73) Patentinhaber: CIBA-GEIGY AG
Patentabteilung Postfach
CH-4002 Basel (CH)

(72) Erfinder: Zweifel, Hans, Dr.
Lothringerstrasse 93
CH-4056 Basel (CH)
Erfinder: Kvita, Vratislav, Dr.
St. Jakobstrasse 2
CH-4132 Muttenz (CH)
Erfinder: Berger, Joseph, Dr.
Route des préalpes 4
CH-1723 Marly (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 439 B1

Unter der Einwirkung von Licht vernetzbare Polymere mit seitenständigen Azidophthalimidylgruppen, Verfahren zur Herstellung derselben und ihre photochemische Anwendung

Die vorliegende Erfindung betrifft neue unter der Einwirkung von Licht vernetzbare Polymere mit seitenständigen Azidophthalimidylgruppen, Verfahren zu deren Herstellung und deren Verwendung zur Vernetzung unter der Einwirkung von Licht, besonders zum Erzeugen von Abbildungen.

Aus der Literatur ist bekannt, dass sich Polymere mit seitenständigen Azidogruppen unter Lichteinwirkung vernetzen lassen und sich für photomechanische Anwendungen eignen (vgl. z.B. britische Patentschrift 843.541, U.S. Patentschrift 3.002.003, Journal of Appl.Poly.Sci., 7,273—279 (1963) und japanische Offenlegungsschrift 74/23843). Es handelt sich dabei um Polymeren, deren seitenständige Azidogruppen frei von Imidylgruppen sind. Die Verknüpfung dieser seitenständigen Gruppen kann beispielsweise über ein N-Atom des Polymeren erfolgen, wie z.B. bei Gelatine-3-azidophthalamid. Diese vorbekannten Polymeren eignen sich nicht oder nur schlecht für zahlreiche Anwendungen, besonders auf dem Gebiet der Mikroelektronik, die hoch lichtempfindliche Substanzen erfordern.

Aufgabe der Erfindung war daher die Bereitstellung von neuen unter der Einwirkung von Licht vernetzbaren Polymeren, welche hoch lichtempfindlich sind und sich für die oben erwähnten Anwendungen, besonders für phototechnische Anwendungen, eignen. Die Vernetzung erfolgt dabei im langwelligen UV-Bereich, d.h. bei mindestens etwa 320 nm.

Gegenstand der Erfindung sind unter der Einwirkung von Licht vernetzbare Polymere, die seitenständige Azidophthalimidylgruppen der Formel I

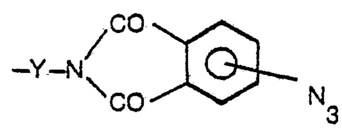

(I)

aufweisen, worin

Y unsubstituiertes oder substituiertes Alkylen mit 2—18 C-Atomen, eine unsubstituierte oder substituierte Phenylen-, Naphthylen-, Biphenylen-, Cyclohexylen-, oder Dicyclohexylmethangruppe oder eine unsubstituierte oder substituierte Gruppierung

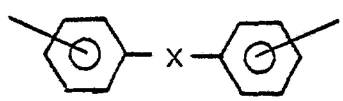

und

X —O—, —S—, —$SO_2$—, —$CH_2$—, —CH($CH_3$)—, —CO— oder —C($CH_3$)$_2$— bedeuten,

wobei der Anteil an Azidophthalimidylgruppen der Formel I mindestens 10 Prozent, bezogen auf die Anzahl der wiederkehrenden Strukturelemente des Polymeren, beträgt.

Bevorzugt sind Polymere, bei denen der Anteil an Azidophthalimidylgruppen der Formel I etwa 30 bis 100 Prozent, bezogen auf die Anzahl der wiederkehrenden Strukturelemente des Polymeren, beträgt.

Die erfindungsgemässen Polymeren weisen zweckmässig ein Durchschnittsmolekulargewicht von mindestens etwa 1000, und bevorzugt ein Durchschnittsmolekulargewicht von etwa 5000 bis 200'000 auf.

Bei den erfindungsgemässen Polymeren handelt es sich z.B. um Polyäther, Polaymine, Polyimine, Polysaccharide, Gelatine oder Polykondensate auf der Basis von Phenol-Formaldehyd (Novolake), vor allem jedoch um Homo- und Copolymere, die sich von Monomeren mit reaktiven C=C-Doppelbindungen ableiten.

Die erfindungsgemässen Polymeren lassen sich nach an sich bekannten Synthesemethoden zur Herstellung von Makromolekülen mit photoaktiven seitenständigen Gruppen herstellen. Grundsätzlich kommen folgende Wege in Betracht:

1. Einbau der Azidophthalimidylgruppierung in eine bestehende Polymerkette;

2. Aufbau der Polymerkette aus Monomeren, welche die lichtempfindliche Azidophthalimidylgruppierung bereits enthalten, wobei die Polymerkette durch Polymerisation oder Polyaddition aufgebaut werden kann.

Teilweise können mit den Methoden 1 und 2 gleiche Produkte erhalten werden, so dass sich wahlweise die Methode 1 oder die Methode 2 anwenden lässt. Werden die Azidophthalimidylgruppierungen in eine bereits vorhandene Polymerkette eingebaut, so erfolgt dieser Einbau

entweder durch eine Kondensationsreaktion oder durch eine Additionsreaktion unter gleichzeitiger Oeffnung eines Ringsystems, z.B. einer Dicarbonsäureanhydridgruppe oder eine Epoxidgruppe.

Als für die Einführung der lichtempfindlichen Azidophthalimidylgruppen der Formel I durch Kondensation oder Addition geeignete Ausgangspolymere sind z.B. folgende Produkte zu erwähnen: Polyacrylsäure, Polymethacrylsäure, Copolymere aus diesen Säuren und anderen äthylenisch ungesättigten Monomeren der vorerwähnten Art, Copolymere, aufgebaut aus Maleinsäureanhydrid und äthylenisch ungesättigten Monomeren, wie Methylvinyläther, Aethylen, Styrol, Hexen-1, Decen-1, Tetracen-1 und Octadecen-1, Polymere mit freien Hydroxylgruppen, wie Homo- oder Copolymere von Acrylsäure- und Methacrylsäurehydroxyalkylestern, Polyvinylalkohole, native oder regenerierte Cellulose, Cellulosederivative, Hydroxyalkylcellulose, Polyäther auf der Basis von Phenoxyharzen, Phenol-Formaldehyd-Polykondensate (Novolake), Polymere mit freien Glycidylgruppen, wie Copolymere auf der Basis von Acryl- und Methacrylsäureglycidylestern, sowie Polymere mit freien Aminogruppen, wie z.B. Poly-p-aminostyrol.

Bevorzugt sind Polymere mit wiederkehrenden Strukturelementen der Formel II oder III

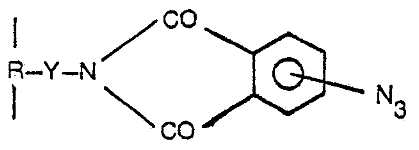

oder

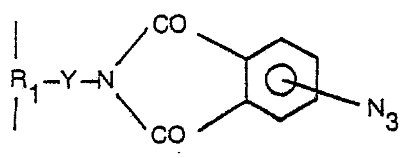

(II) (III)

worin Y die unter Formel I angegebene Bedeutung hat,

R 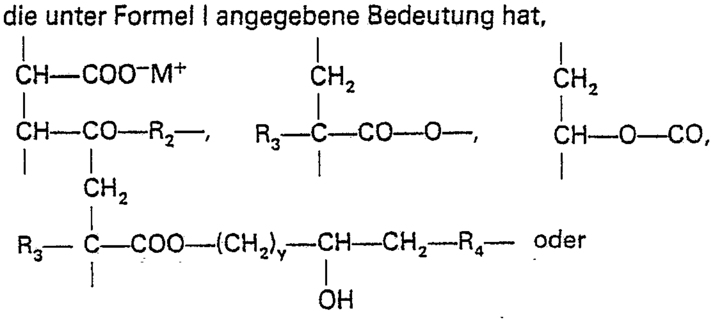

oder

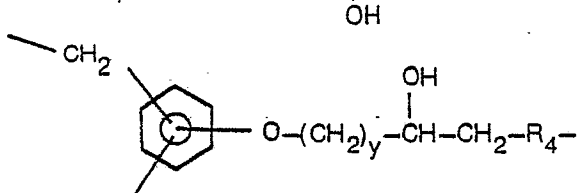

$R_1$ 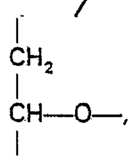

$R_2$ —O—, —NH— oder —N-Alkyl mit 1—4 C-Atomen,
$R_3$ Wasserstoff oder Methyl,
$R_4$ —O—CO—, —NH—, —N-Alkyl mit 1—4 C-Atomen oder —O—,
$M^+$ das Wasserstoffion, ein Alkalimetallkation, das Pyridiniumkation oder

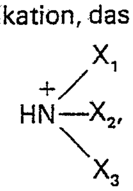

$X_1$ und $X_2$ unabhängig voneinander Wasserstoff oder Alkyl mit 1—12 C-Atomen, $X_3$ Wasserstoff, Alkyl mit 1—12 C-Atomen oder Benzyl und y die Zahl 1 oder 2 bedeuten, wobei der Anteil an Gruppierungen

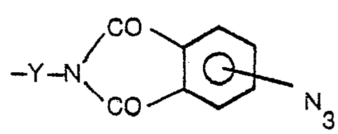

mindestens 10 Prozent und bevorzugt mindestens 30 Prozent, bezogen auf die Anzahl der wiederkehrenden Strukturelemente des Polymeren beträgt.

Durch Y dargestellte Alkylengruppe können geradkettig oder verzweigt und gegebenenfalls substituiert sein, z.B. durch eine oder mehrere Phenylgruppen, Cycloalkylgruppen mit 5—8 C-Atomen oder Aralkylgruppen mit 7 oder 8 C-Atomen. Unter den substituierten Alkylengruppen Y sind solche bevorzugt, die durch eine oder zwei Phenylgruppen oder durch eine oder zwei definitionsgemässe Cycloalkylgruppen oder Aralkylgruppen, wie die Cyclohexyl- oder die Benzylgruppe, substituiert sind.

Beispiele von derartigen Alkylengruppen Y sind: die 1,2-Aethylen-, 1,3- oder 1,2-Propylen-, 1,4- oder 1,3-Butylen-, 1,5-Pentamethylen, 1,6-Hexamethylen-, 2-Methyl-4-dimethylhexan-, 2-Dimethyl-4-methylhexan-, 1,10-Dicyclohexyl- oder 1,10-Dicyclooctyl-1,10-decan-, 1,10-Di-isopropyldecan-, 1,1,10,10-Tetramethyldecan-, 1,10-Diäthyl-1,10-dimethyldecan-, 1,8-Octamethylen-, 1,10-Decamethylen-, 1,12-Dodecamethylen- und 1-Aethyl-10,10-dimethylundecamethylengruppe. Bevorzugt sind unsubstituierte geradkettige oder verzweigte Alkylengruppen, besonders solche mit 2—16 C-Atomen.

Durch Y dargestellte Phenylen-, Naphthylen-, Biphenylen-, Cyclohexylen- oder Dicyclohexylmethangruppen oder Gruppierungen Y

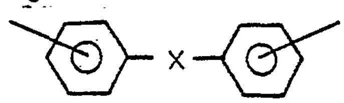

können ebenfalls substituiert sein, z.B. durch Halogenatome, wie Fluor, Chlor oder Brom, Alkylgruppen mit 1—4 C-Atomen, besonders Methyl oder Aethyl, Cycloalkylgruppen mit 5—7 C-Atomen, besonders Cyclopentyl und Cyclohexyl, oder Aralkylgruppen mit 7 oder 8 C-Atomen, wie Benzyl oder β-Phenyläthyl. Die genannten Gruppen können an jedem Ring mehrere Substituenten der erwähnten Art aufweisen, sind aber mit Vorteil pro Ring nur durch eine der genannten Gruppen substituiert, vor allem durch Chlor oder Brom, Methyl oder Aethyl.

Bevorzugt sind Phenylen-, Naphthylen-, Cyclohexylen-, Biphenylen-, Dicyclohexylmethan- und

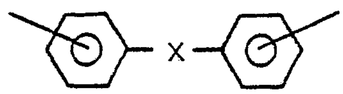

-Gruppen Y jedoch unsubstituiert, und X stellt mit Vorteil —O—, —$SO_2$— oder —$CH_2$— dar. Besonders bevorzugt stellt Y unsubstituiertes Alkylen mit 2—18, besonders 2—16 C-Atomen, Cyclohexylen, Naphthylen oder Phenylen dar.

Die $N_3$-Gruppe ist bevorzugt in 3-Stellung an den Benzolring gebunden. Bevorzugte Bedeutungen von $R_2$ sind —O— und —NH—, während $R_4$ insbesondere —O—CO— oder —NH— darstellt.

Alkylgruppen $X_1$, $X_2$ und $X_3$ können geradkettig oder verzweigt sein und weisen bevorzugt 1—4 C-Atome auf. Stellt $M^+$ eine Gruppierung

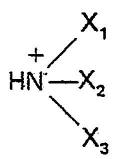

dar, so bedeuten $X_1$ und $X_2$ bevorzugt Alkylgruppen mit 1—4 C-Atomen und $X_3$ eine Alkylgruppe mit 1—4 C-Atomen oder die Benzylgruppe. Vorzugsweise stellt $M^+$ jedoch ein Alkalimetallkation, besonders das Natrium- oder Kaliumkation, und vor allem das Wasserstoffion dar.

Besonders bevorzugt sind Polymere mit wiederkehrenden Strukturelementen der Formel II, worin Y unsubstituiertes Alkylen mit 2—18 und insbesondere 2—16 C-Atomen, Cyclohexylen, Naphthylen oder Phenylen, R eine Gruppierung

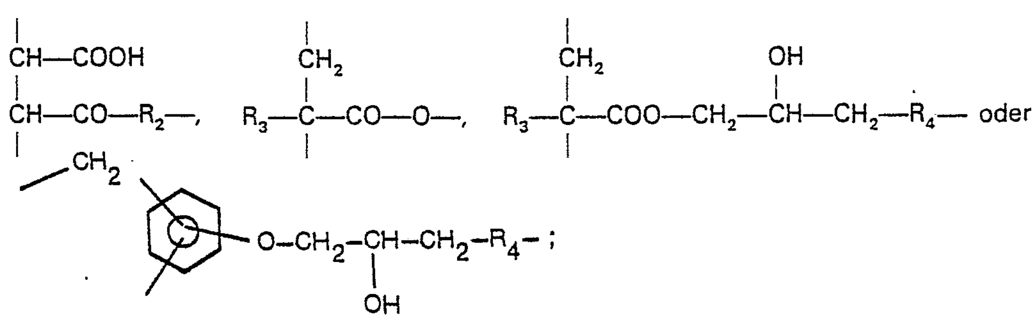

, , oder ;

$R_2$ —NH— und insbesondere —O— und $R_4$ —NH— und insbesondere —O—CO-bedeuten, oder Polymere mit wiederkehrenden Strukturelementen der Formel III, worin $R_1$ die angegebene Bedeutung hat und Y Alkylen mit 1—4 C-Atomen darstellt, wobei der Anteil an Strukturelementen der Formel II oder III mindestens etwa 30%, bezogen auf die Gesamtzahl der wiederkehrenden Strukturelemente des Polymeren, beträgt.

Die erfindungsgemässen Polymeren können dadurch erhalten werden, dass man entweder eine Verbindung der Formel IV

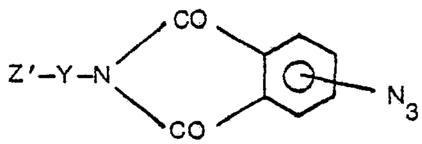

(IV),

worin Y die unter Formel I angegebene Bedeutung hat und

$Z'$ —OH, —COOH, —COCl, —$NH_2$ oder —NH-Alkyl mit 1—4 C-Atomen bedeutet, mit einem Polymeren mit entsprechenden funktionellen Gruppen in einem Verhältnis von 1:10 bis 1:1, bezogen auf die Anzahl der wiederkehrenden Strukturelemente im Polymeren, zur Reaktion bringt, oder eine Verbindung der Formel V

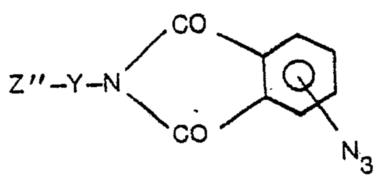

(V),

worin Y die unter Formel I angegebene Bedeutung hat und

$Z''$ —O—CH=$CH_2$, —O—CO—C=$CH_2$ oder —COO—CH=$CH_2$ und
|
$R_3$

$R_3$ Wasserstoff oder Methyl bedeuten,

gegebenenfalls in Gegenwart von äthylenisch ungesättigten Comonomeren polymerisiert, wobei das Mol-Verhältnis von Verbindung der Formel V zu Comonomerem 1:10 bis 1:10 beträgt und die Polymerisation vorzugsweise in Lösung radikalisch erfolgt.

Erfindungsgemässe Polymere, welche wiederkehrende Strukturelemente der Formel II aufweisen, worin

R eine Gruppierung 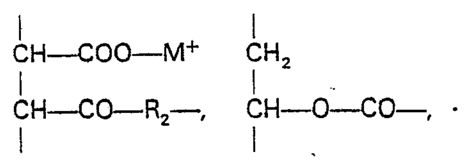

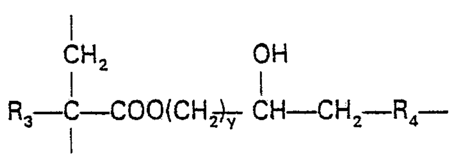 oder 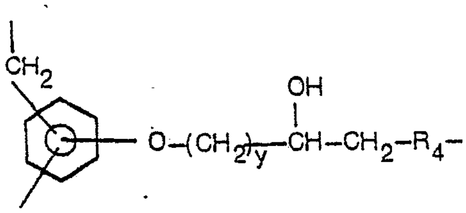

bedeutet und $M^+$, $R_2$, $R_3$, $R_4$ und y die oben angegebene Bedeutung haben, können dadurch hergestellt werden, dass man

(a) eine Verbindung der Formel IVa

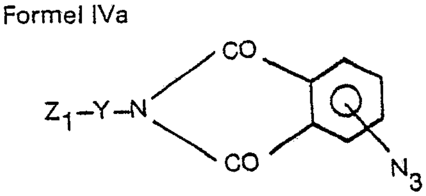

(IVa),

worin Y die oben angegebene Bedeutung hat und

$Z_1$ —OH, —$NH_2$ oder —NH-Alkyl mit 1—4 C-Atomen darstellt, mit einem Polymeren mit wiederkehrenden Strukturelementen

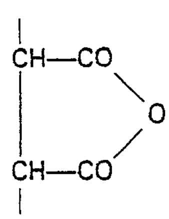

(b) eine Verbindung der Formel IVb

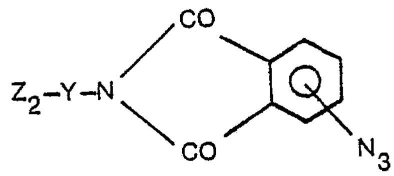

(IVb),

worin Y die oben angegebene Bedeutung hat und

$Z_2$ —COCl oder —COOH darstellt, mit einem Polymeren mit wiederkehrenden Strukturelementen

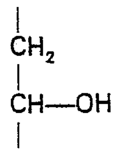 oder

(c) eine Verbindung der Formel IVc

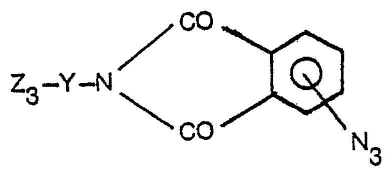

(IVc),

worin Y die oben angegebene Bedeutung hat und

$Z_3$ —COOH, —OH, —$NH_2$ oder —NH-Alkyl mit 1—4 C-Atomen bedeutet, mit einem Polymeren mit wiederkehrenden Strukturelementen

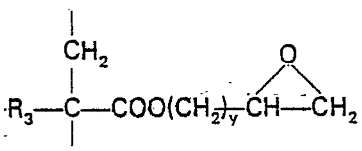 oder 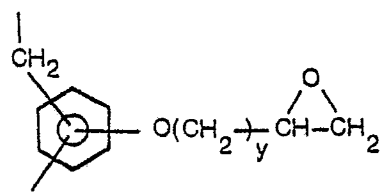

zur Reaktion bringt und Polymere, worin $M^+$ das Wasserstoffion darstellt, gegebenenfalls in definitionsgemässe Salze überführt, wobei $R_3$ und y die oben angegebene Bedeutung haben, und die Verbindungen der Formel IVa, IVb oder IVc in einem Verhältnis von 1:10 bis 1:1, bevorzugt 3:10 bis 1:1, bezogen auf die Gesamtzahl der wiederkehrenden Strukturelemente des Polymeren, eingesetzt werden.

Erfindungsgemässe Polymere, die wiederkehrende Strukturelemente der Formel II oder III aufweisen, worin

R 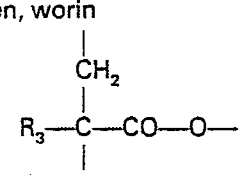 oder 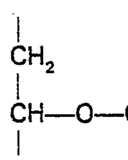 und

$R_1$ 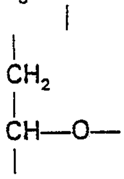 bedeuten und $R_3$ die oben angegebene Bedeutung hat,

können dadurch hergestellt werden, dass man eine Verbindung der Formel Va

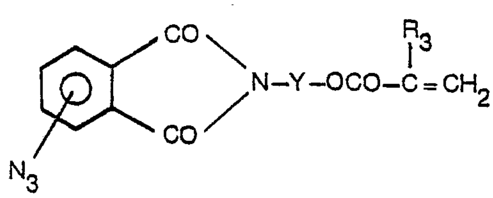

(Va),

Vb

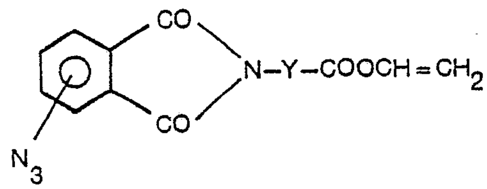

(Vb)

oder Vc

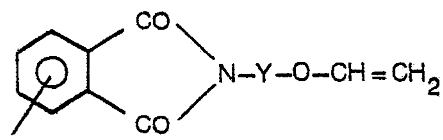

(Vc)

worin Y und $R_3$ die oben angegebene Bedeutung haben, gegebenenfalls in Gegenwart von äthylenisch ungesättigten Comonomeren polymerisiert, wobei das Mol-Verhältnis von Verbindung der Formel Va, Vb oder Vc zu Comonomerem 1:10 bis 1:0, bevorzugt 3:10 bis 1:0, beträgt und die Polymerisation vorzugsweise in Lösung radikalisch erfolgt.

Y in Formel Vc stellt insbesondere Alkylen mit 1—4 C-Atomen dar.

Als Comonomere zur Herstellung der Polymerketten, in welche anschliessend die Azidophthalimidylgruppierungen eingebaut werden, oder als Comonomere zur Copolymerisation mit Verbindungen der Formel V bzw. Va, Vb und Vc, können insbesondere solche der Formel VI

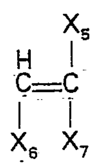

(VI)

verwendet werden, worin $X_6$ Wasserstoff, $X_5$ Wasserstoff, Chlor oder Methyl und $X_7$ Wasserstoff, Methyl, Chlor, —CN, —COOH, —$CONH_2$, Phenyl, Methylphenyl, Methoxyphenyl, Cyclohexyl, Pyridyl, Imidazolyl, Pyrrolidonyl, —COO-Alkyl mit 1—12 C-Atomen im Alkylteil, —COO-Phenyl,

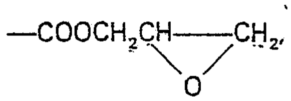

—COO-Alkyl-OH mit 1—3 C-Atomen im Alkyl, 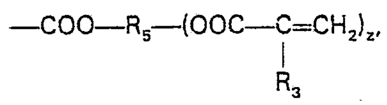

worin $R_5$ einen geradkettigen oder verzweigten gesättigten aliphatischen Rest mit 1—10 C-Atomen, $R_3$ Wasserstoff oder Methyl und z eine ganze Zahl von 1—3 bedeuten, $X_7$ ferner —OCO-Alkyl mit 1—4 C-Atomen im Alkyl, —OCO-Phenyl, —CO-Alkyl mit 1—3 C-Atomen im Alkyl, Alkoxy mit 1—6 C-Atomen, Phenoxy, —CH=$CH_2$ oder

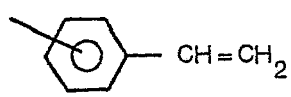

oder $X_5$ Wasserstoff und $X_6$ und $X_7$ zusammen die Gruppierung

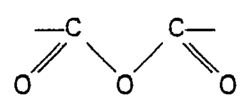

oder je —COOH oder —COO-Alkyl mit 1—6 C-Atomen im Alkyl darstellen.

Unter Mitverwendung von Comonomeren der Formel VI werden Polymere erhalten, die als weitere wiederkehrende Strukturelemente solche der Formel VIa

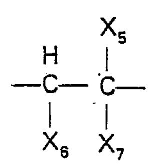

(VIa)

enthalten, worin $X_5$, $X_6$ und $X_7$ die zuvor genannte Bedeutung haben.

Als Beispiele von geeigneten Comonomeren der Formel VI seien erwähnt: Aethylen, Propylen, 1-Buten, Isopren, Chloropren, 1,4-Butadien, Vinylchlorid, Vinylidenchlorid, Acrylsäure, Methacrylsäure, Acrylonitril, Methacrylonitril, Chloracrylonitril, Styrol, kernsubstituierte Methylstyrole, 4-Methoxystyrol, Vinylcyclohexan, Acrylsäure- und Methacrylsäuremethyl- -äthyl-, isopropyl-, -2-äthylhexyl- und -phenylester, Essigsäure- und Propionsäurevinylester, Acrylsäure- und Methacrylsäure-2,3-epoxypropylester, Benzoesäurevinylester, 2- und 4-Vinylpyridin, Vinylimidazol, Vinylpyrrolidon, Methylvinylketon, Aethylvinylketon, Aethylvinyläther, n-Butylvinyläther, Malein- oder Fumarsäure und deren Alkylester, Maleinsäureanhydrid.

Bevorzugt sind Verbindungen der Formel VI und die daraus hergestellten Copolymere, worin Wasserstoff, $X_5$ Wasserstoff oder Methyl und $X_7$ —$OCOCH_3$, —COOH oder —COOAlkyl mit 1—8 C-Atomen im Alkyl bedeuten, oder worin $X_5$ und $X_6$ je Wasserstoff und $X_7$ —CN, Chlor, Phenyl oder Styrol bedeuten. Als Copolymerisationskomponenten besonders bevorzugt sind Acrylsäuremethyl- und -äthylester, Methacrylsäuremethylester, Methylvinyläther, Styrol und Maleinsäureanhydrid bzw. die daraus hergestellten Copolymere.

Die Einführung erfindungsgemässer Azidophthalimidylgruppen in bestehende Polymerketten mittels Kondensations- oder Additionsreaktion kann auf an sich bekannte Weise erfolgen, zweckmässig bei Temperaturen von etwa −50°C bis +150°C. Die Umsetzung wird vorzugsweise in einem inerten organischen Lösungsmittel oder einem Lösungsmittelgemisch durchgeführt, für die Kondensation bevorzugt bei Temperaturen von etwa −20°C bis +100°C. Additionsreaktionen werden zweckmässig bei erhöhter Temperatur, im allgemeinen bei Temperaturen zwischen etwa 80 und 120°C oder bei Rückflusstemperatur vorgenommen.

Geeignete Lösungsmittel zur Durchführung der Kondensations- oder Additionsreaktionen sind beispielsweise: aliphatische oder cyclische Ketone, wie Aceton, Methyläthylketon, Isopropylmethylketon, Cyclohexanon, Cyclopentanon und $\gamma$-Butyrolacton; cyclische Aether, wie Tetrahydrofuran, Tetrahydropyran und Dioxan; cyclische Amide, wie N-Methyl-2-pyrrolidon, N-Aethyl-2-pyrrolidon, N-Methyl-$\varepsilon$-caprolactam; N,N-Dialkylamide von aliphatischen Monocarbonsäuren mit 1—3 C-Atomen im Säureteil, wie N,N-Dimethylformamid, N,N-Dimethylacetamid, N,N-Diäthylacetamid, N,N-Dimethylmethoxyacetamid; Pyridin und Pyridinbasen oder tertiäre Amine, vor allem Trialkyl- und Dialkylbenzylamine mit bevorzugt je 1—4 C-Atomen in den Alkylteilen, z.B. Triäthylamin und Diäthyl benzylamin; Dialkylsulfoxide, wie Dimethyl- und Diäthylsulfoxid.

Bevorzugte Lösungsmittel für Kondensationsreaktionen sind cyclische Amide und N,N-Dialkylamide der vorerwähnten Art, besonders N-Methyl-2-pyrrolidon, N,N-Dimethylformamid und N,N-Dimethylacetamid. Für Additionsreaktionen werden cyclische Aether und cyclische Ketone, vor allem Tetrahydrofuran und Cyclohexanon, sowie Pyridin bevorzugt.

Wird die Umsetzung von Verbindungen der Formel IVa mit Polymeren mit Strukturelementen

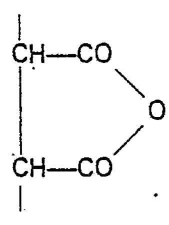

in Gegenwart von Pyridin oder einem tertiären Amin vorgenommen, so erhält man direkt die entsprechenden Salze. Definitionsgemässe Salze ($M^+ \neq H$) können auch durch Behandeln der nach der Umsetzung anfallenden Polymeren mit entsprechenden Salzen, vor allem Alkalimetallhalogeniden, hergestellt werden, wobei man die Polymer-Salze anschliessend zweckmässig mittels Dialyse reinigt.

Man kann der Reaktionslösung auch Katalysatoren zusetzen, welche die gewünschte Verknüpfung begünstigen. So ist z.B. für die Bildung von Estern der Zusatz tertiärer Amine, wie Triäthylamin oder Pyridin, quaternärer Ammoniumsalze, wie Tetraalkylammoniumchloriden mit je 1—4, bevorzugt 1 oder 2 C-Atomen in den Alkylgruppen, p-Toluolsulfonsäure oder konz. Schwefelsäure günstig.

Nach der Umsetzung lassen sich die mit Azidophthalimidylgruppen modifizierten Polymere durch Zugabe kleiner Mengen eines wenig polaren Lösungsmittels ausfällen. Beispiele solcher wenig polarer Lösungsmittel sind Dialkyläther mit je 2—4 C-Atomen in den Alkylteilen, wie Diäthyläther und Di-n-propyläther, Alkohole mit bis zu 6 C-Atomen, wie Methanol, Aethanol, Isopropanol, Butanole und Pentanole, aliphatische, cycloaliphatische oder aromatische Kohlenwasserstoffe, wie n-Pentan, n-Hexan, Cyclohexan, Benzol oder Toluol.

Die Homopolymerisation der Verbindungen der Formel V bzw. Va, Vb und Vc oder deren Copolymerisation mit anderen äthylenisch ungesättigten Monomeren, z.B. solchen der Formel VI, können ebenfalls auf an sich bekannte Weise vorgenommen werden, z.B. in Gegenwart üblicher kationischer oder anionischer Initiatoren. Bevorzugt ist die radikalische Polymerisation. Dabei verwendet man zweckmässig etwa 0,01 bis 5 Gew.%., vorzugsweise 0,01 bis 1,5 Gew.% bezogen auf das Gesamtgewicht der Monomeren, an sich bekannter Radikalinitiatoren, wie anorganische

oder organische Peroxide oder Azoverbindungen, z.B. Wasserstoffperoxid, Kaliumperoxidsulfat, tert-Butylhydroperoxid, Di-tert-butylperoxid, Peressigsäure, Benzoylperoxid, Diacylperoxide, Cumolhydroperoxid, tert-Butylperbenzoat, tert-Alkylperoxicarbonate und $\alpha,\alpha'$-Azoisobutyronitril. Die Reaktionstemperaturen für die radikalische Polymerisation liegen im allgemeinen bei etwa 30—100°C.

Für die radikalische Polymerisation in der Kälte können auch Redoxsysteme in den oben genannten Konzentrationen verwendet werden, beispielsweise Gemische aus Peroxiden, wie Wasserstoffperoxid, und einem Reduktionsmittel, wie zweiwertige Eisenionen.

Die Polymerisation kann in homogener Phase, z.B. in Substanz (Blockcopolymerisation) oder in Lösung, oder in heterogener Phase, d.h. als Fällungspolymerisation, Emulsions- oder Suspensionspolymerisation, erfolgen. Bevorzugt ist die Polymerisation in Lösung.

Geeignete Lösungsmittel sind solche der bei der Kondensations- bzw. Additionsreaktion erwähnten Art sowie: halogenierte aromatische Kohlenwasserstoffe, wie Chlorbenzole und Dichlorbenzole; halogenierte aliphatische Kohlenwasserstoffe, wie Methylenchlorid, Chloroform, Tetrachloräthan und Tetrachloräthylen; Alkylester von aliphatischen Monocarbonsäuren mit insgesamt 2—6 C-Atomen, wie Ameisen- oder Essigsäuremethyl-, äthyl- und -n-butylester; Aethylenglykoldialkyläther mit 1—4 C-Atomen in den Alkylteilen, wie Aethylenglykoldimethyl-, -diäthyl- und -di-n-butyläther. Es können auch Gemische derartiger Lösungsmittel verwendet werden.

Nach beendeter Umsetzung kann das Polymere durch Eingiessen in geeignete organische Lösungsmittel, z.B. aliphatische Kohlenwasserstoffe, Alkohole oder Dialkyläther, wie n-Pentan, n-Hexan, Methanol, Aethanol und Diäthyläther, ausgefällt werden.

Die für die Herstellung der erfindungsgemässen Polymeren zu verwendenden Verbindungen der Formel IV und V bzw. IVa bis IVc und Va bis Vc können dadurch hergestellt werden, dass man eine Verbindung der Formel VII

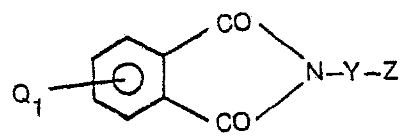

(VII),

worin Y die unter Formel I angegebene Bedeutung hat, Z —$NH_2$, —NH-Alkyl mit 1—4 C-Atomen, —OH, —COOH, —O—CH=$CH_2$, —O—CO—C($R_3$)=$CH_2$ oder —COO—CH=$CH_2$, $R_3$ Wasserstoff oder Methyl und $Q_1$ ein Halogenatom, wie Chlor, Fluor oder Brom, und insbesondere die Nitrogruppe bedeuten, in einem inerten organischen Lösungsmittel bei einer Temperatur zwischen etwa 0 und 120°C, bevorzugt zwischen etwa 50 und 90°C, mit einem Azid der Formel VIII

$$M_1^{p+} (N_3^-)_p \qquad \text{(VIII)},$$

worin p die Zahl 1 oder 2 und $M_1$ ein Erdalkalimetall-, Alkalimetall- oder quaternäres Ammoniumkation bedeuten, umsetzt und die erhaltenen Verbindungen der Formel IV, worin Z = —COOH, gegebenenfalls durch Behandeln mit einem geeigneten Chlorierungsmittel, wie Thionylchlorid, Oxalylchlorid oder Phosgen, in das entsprechende Säurechlorid überführt.

Stellt $M_1$ ein quaternäres Ammoniumkation dar, so handelt es sich insbesondere um ein Tetraalkyl- oder Trialkylbenzylammoniumkation mit je 1—12 und bevorzugt 1—4 C-Atomen in den Alkylteilen. Das Azid wird zweckmässig in einem etwa 5—50%igen, besonders einem etwa 10—30%igen molaren Ueberschuss eingesetzt. Bevorzugt verwendet man ein Alkalimetallazid, besonders Natriumazid. Als organische Lösungsmittel können vor allem polare Lösungsmittel, wie aliphatische Alkohole mit bis zu 6 C-Atomen, cyclische Aether und cyclische Amide oder N,N-Dialkylamide von aliphatischen Monocarbonsäuren der vorerwähnten Art sowie aromatische und aliphatische Nitrile, wie Benzonitril, Acetonitril und Propionitril, verwendet werden. Bevorzugte Lösungsmittel sind jedoch Dialkylsulfoxide, vor allem Dimethylsulfoxid.

Die Verbindungen der Formel VII können auf an sich bekannte Weise durch Umsetzen von 3- oder 4-Nitrophthalsäureanhydrid oder den entsprechenden Halogenverbindungen mit Aminen der Formel $H_2N$—Y—Z und anschliessende Cyclisierung der entstandenen Amidcarbonsäuren erhalten werden.

Verbindungen der Formel IV und Verbindungen der Formel V, worin Z'' ungleich —OCH=$CH_2$ ist, können auch dadurch erhalten werden, dass man 3- oder 4-Azidophthalsäureanhydrid mit einem Amin der Formel $H_2N$—Y—Z'' zu einer Verbindungen der Formel IX

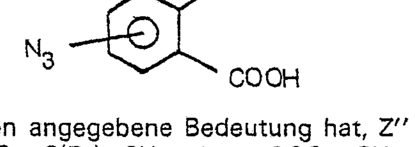

(IX)

umsetzt, wobei Y die oben angegebene Bedeutung hat, Z'' —OH, —COOH, —$NH_2$, —NH-Alkyl mit 1—4 C-Atomen, —O—CO—C($R_3$)=$CH_2$ oder —COO—CH=$CH_2$ und $R_3$ Wasserstoff oder Methyl darstellen, die Verbindung der Formel IX anschliessend auf an sich bekannte Weise cyclisiert, z.B. in Gegenwart von Dehydratisierungsmitteln, wie Essigsäureanhydrid, und Verbindungen der Formeln IV, worin Z' = —COOH, gegebenenfalls anschliessend in das entsprechende Säurechlorid überführt.

Schliesslich können Verbindungen der Formel V, worin

Z'' —O—CO—C($R_3$)=$CH_2$ oder —COOCH=$CH_2$ darstellt, auch wie folgt hergestellt werden:

Z'' = —OCOC($R_3$)=$CH_2$: Durch Umsetzung einer Verbindung der Formel VII, worin Z = —OH, mit entsprechenden ungesättigten Säuren, Säurechloriden oder Estern.

Z'' = —COOCH=$CH_2$: Durch Umsetzen einer Verbindung der Formel VII, worin Z = —COOH, mit entsprechenden Alkoholen oder Estern in Gegenwart von Säuren oder Basen.

Die erfindungsgemässen Polymeren lassen sich unter der Einwirkung von Licht vernetzen und eignen sich beispielsweise zur Herstellung von Druckplatten für das Offsetdruckverfahren, zur Herstellung von Photooffset-Lacken, für die unkonventionelle Photographie, z.B. zur Herstellung von sogenannten Vesikularbildern oder zum Anfärben von nach dem Belichten und Entwickeln schlecht sichtbaren Polymerbildern mit geeigneten Farbstoffen, wie öllösliche Farbstoffe oder, wenn das Polymere saure Gruppen, wie Carbonsäure- oder Sulfonsäuregruppen aufweist, kationische Farbstoffe. Die erfindungsgemässen Polymeren finden insbesondere Anwendung als sogenannte Photoresist zur Herstellung von gedruckten Schaltungen nach an sich bekannten Methoden. Dabei wird die mit der lichtempfindlichen Schicht versehen Seite der Leiterplatte durch ein das Leiterbild aufweisendes Dianegativ belichtet und dann entwickelt, worauf man die unbelichteten Stellen der Schicht durch Entwicklungsflüssigkeit herausholt.

Die Belichtung kann mit Sonnenlicht, Kohlelichtbogen oder Xenonlampen durchgeführt werden. Mit Vorteil wird die Belichtung mit Quecksilberhochdrucklampen vorgenommen. Die Trägermaterialien können nach an sich üblichen Techniken mit den lichtempfindlichen Polymeren beschichtet werden, z.B. durch Tauchverfahren, Sprüh-, Schleuder-, Kaskaden- und Vorhangguss, oder sogenanntes "rollercoating".

## Beispiel 1

In einem 1-Liter Reaktionsgefäss, das mit Doppelmantel, Rührer, Intensivkühler und Thermometer ausgestattet ist, werden unter Gelblicht 120,0 g eines Gemisches aus N-($\beta$-Methacryloyloxyäthyl)-3- und -4-azidophthalimid und 1,20 g Azoisobutyronitril in 545 ml Tetrahydrofuran gelöst. Diese Lösung wird unter Umrühren und unter Stickstoffatmosphäre während 8 Stunden bei 70°C polymerisiert. Nach beendeter Reaktion wird das Reaktionsgemisch auf Raumtemperatur (20—25°C) abgekühlt, und das Polymere wird durch Eintropfen der Reaktionslösung in 4 Liter n-Hexan ausgefällt. Man erhält 113,8 g (94,8% d.Th.) eines schwach gelblichen Polymeren; inhärente Viskosität $\eta$ = 0,22 dl/g (c = 0,5 Gew.% in N,N-Dimethylformamid bei 25°C).

Zur Herstellung von photoempfindlichen Platten, z.B. zur Herstellung von gedruckten Schaltungen, wird nach an sich bekannter Herstellungstechnik [vgl. Bogenschütz in "Fotolacktechnik", Eugen G. Lenze-Verlag, DT 7968 Saulgau (1975)] mit einer 5%igen Lösung des obigen Polymeren in N,N-Dimethylformamid (DMF) eine kupferkaschierte Epoxiplatte so beschichtet, dass nach dem Trocknen bei 40°C ein ca. 5 $\mu$ dicker Film gebildet wird. Belichtet man nun $\mu$m diese Platte durch ein Strichnegativ mit UV Licht ($\lambda$ über 320 nm) während einer Minute, so erhält man nach dem Entwickeln der unvernetzten Anteile in Tetrahydrofuran und dem Wegätzen der ungeschützen Kupferoberfläche die dem Strichnegativ entsprechende Schaltung.

## Beispiel 2.

In einer Apparatur der in Beispiel beschriebenen Art werden unter Gelblicht 105,0 g eines Gemisches von N-(2-Methacryloyloxyäthyl)-3- und -4-azidophthalimid, 15,0 g Acrylsäureäthylester und 1,20 g Azoisobutyronitril in 545 ml Tetrahydrofuran gelöst. Diese Lösung wird unter Umrühren und unter Stickstoffatmosphäre während 8 Stunden bei 70°C polymerisiert. Nach beendeter Reaktion wird auf Raumtemperatur abgekühlt, und das erhaltene Polymere wird durch Eintropfen der Reaktionslösung in 4 Liter n-Hexan ausgefällt. Man erhält 113,8 g (94,8% d.Th.) eines schwach gelblichen Polymeren; inhärente Viskosität $\eta$ = 0,28 dl/g (c = 0,5 Gew.% in DMF bei 25°C).

## Beispiel 3

In einer Apparatur der in Beispiel 1 beschriebenen Art werden unter Gelblicht 120,0 g eines Gemisches aus N-($\beta$-Acryloyloxyäthyl)-3- und -4-azidophthalimid und 1,20 g Azoisobutyronitril in 545 ml Tetrahydrofuran gelöst. Diese Lösung wird unter Umrühren und unter Stickstoffatmosphäre während 8 Stunden bei 70°C polymerisiert. Nach beendeter Reaktion wird auf Raumtemperatur abgekühlt, und das Polymere wird durch Eintropfen der Reaktionslösung in 4 Liter n-Hexan ausgefällt. Man erhält 111,3 g (92,8% d.Th.) eines leicht gelblichen Polymeren; inhärente Viskosität $\eta$ = 0,15 dl/g (c = 0,5 Gew.% in DMF bei 25°C).

## Beispiel 4

In einer Apparatur der in Beispiel 1 beschriebenen Art werden unter Gelblicht 100,0 g eines Gemisches von N-($\beta$-Methacryloyloxyäthyl)-3- und -4-azidophthalimid, 20,0 g Methacrylsäuremethylester, 13,3 g Acrylsäure-äthylester und 1,33 g Azoisobutyronitril in 606 ml Tetrahydrofuran gelöst. Das Reaktionsgemisch wird unter Umrühren und unter Stickstoffatmosphäre während 8 Stunden bei 70°C polymerisiert. Nach beendeter Umsetzung wird auf Raumtemperatur abgekühlt, und das Polymere wird durch Eintropfen der Reaktionslösung in 4 Liter n-Hexan ausgefällt. Man erhält 125,3 g (94,2% d.Th.) eines schwach gelblichen Polymeren; inhärente Viskosität $\eta = 0{,}20$ dl/g (c = 0,5 Gew.% in DMF bei 25°C).

Beispiel 5

In einer Apparatur der in Beispiel 1 beschriebenen Art werden unter Gelblicht 90,0 g eines Gemisches von N-($\beta$-Methacryloyloxyäthyl)-3- und -4-azidophthalimid, 20,2 g Methacrylsäuremethylester und 1,10 g Azoisobutyronitril in 500 ml Tetrahydrofuran gelöst. Dieses Gemisch wird unter Umrühren und unter Stickstoffatmosphäre während 8 Stunden bei 70°C polymerisiert. Nach beendeter Reaktion wird auf Raumtemperatur abgekühlt, und das Polymere wird durch Eintropfen der Reaktionslösung in 4 Liter n-Hexan ausgefällt. Man erhält 104,8 g (95,3% d.Th.) eines schwach gelblichen Polymeren; inhärente Viskosität $\eta = 0{,}18$ dl/g (c = 0,5 Gew.% in DMF bei 25°C).

Beispiel 6

Auf analoge Weise wie in den vorangehenden Beispielen beschrieben wird ein Gemisch von N-($\beta$-Methacryloyloxyäthyl)-3- und -4-azidophthalimid mit Acrylsäure in einem Gewichtsverhältnis von 1:4 während 20 Stunden bei 60°C in Gegenwart von 0,5 Gew.% Azoisobutyronitril, bezogen auf das Gewicht der Monomeren, polymerisiert. Das erhaltene Polymere wird durch Eintropfen der Reaktionslösung in Diäthyläther ausgefällt. Man erhält ein schwach gelbliches Polymeres; inhärente Viskosität $\eta = 0{,}23$ dl/g (c = 0,5 Gew.% in DMF bei 25°C).

Die gemäss den Beispielen 2—6 erhaltenen Polymeren können auf die beschriebene Weise zur Herstellung von gedruckten Schaltungen verwendet werden.

Beispiel 7a

In einem 250 ml Rundkolben, der mit Intensivkühler und Trockenrohr ausgestattet ist, werden 2,5 g N-($\beta$-Hydroxyäthyl)-3-azidophthalimid, 5,0 g eines Copolymeren aus Methylvinyläther und Maleinsäureanhydrid ("GANTREZ 119", Handelsprodukt der Fa. GAF, Anhydridgehalt 0,64 Mol; $\eta$ = 5,76 mPas), d.h. ein Polymeres mit wiederkehrenden Strukturelementen der Formel

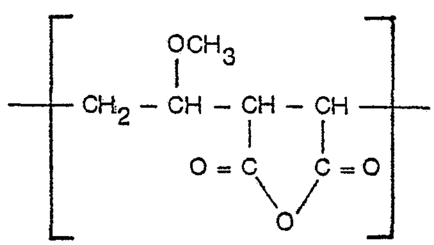

und 0,1 ml konzentrierte Schwefelsäure in 77 ml Tetrahydrofuran gelöst. Nach dem Aufheizen des Reaktionsgemisches wird dieses unter Umrühren während 48 Stunden am Rückfluss gehalten. Nach dem Erkalten der Reaktionslösung wird das erhaltene Polymere durch Eintropfen der Reaktionslösung in 500 ml Diäthyläther ausgefällt. Man erhält 6,8 g (91% d.Th.) eines hellgelben Polymeren das 33,5 Gew.% Azid enthält.

Zur Herstellung von photoempfindlichen Platten, z.B. für die Herstellung von gedruckten Schaltungen, wird mit einer 5%igen Lösung des obigen Polymeren in DMF eine kupferkaschierte Epoxiplatte so beschichtet, dass nach dem Trocknen bei 40°C ein ca. 5 $\mu$m dicker Polymerfilm gebildet wird. Durch Belichten dieser Platte durch ein Strichnegativ mit UV-Licht ($\lambda$ über 320 nm) während einer Minute, dem Entwickeln der unvernetzten Anteile in Tetrahydrofuran und einer 3%igen Natriumcarbonatlösung und dem Wegätzen der ungeschützten Kupferoberfläche erhält man die dem Strichnegativ entsprechende Schaltung.

Vergleichsbeispiel 7b

In 78,3 ml Tetrahydrofuran werden unter Gelblicht 2,5 g 4-(2-Hydroxy-aethoxy)-phenylazid, 4,4 g Gantrez An 119 und 0,88 ml Pyridin gelöst und 24 Stunden bei 45—50° gerührt. (Das 4-(2-Hydroxyäthoxy)-phenylazid entspricht dem $\beta$-(4-Azidophenoxy)-äthanol des Beispiels 9 des GB-Patentes 843,541). Die auf Raumtemperatur gekühlte Suspension wird filtriert und das Filtrat auf 2 l Diäthyläther ausgefällt. Die Suspension wird genutscht und das Polymer bei Raumtemperatur am Vacuum getrocknet.

Ausbeute: 6,7 g = 97% d.Th.
Analyse: C 48,9%
H 5,75%
N 3,93%

Analog Beispiel 7 a lässt sich auch mit diesem Polymer eine photoempfindliche Platte herstellen. Die Platte mit dem erfindungsgemässen Polymer nach Beispiel 7 a ist 20 mal lichtempfindlicher als die zuletzt beschriebene Platte gemäss Vergleichsbeispiel 7b.

Beispiel 8

In einer Apparatur der in Beispiel 7 beschriebenen Art werden 7,5 g eines Gemisches von N-(β-Hydroxyäthyl)-3-und -4-azidophthalimid, 10,0 g "Gantrez 119" und 0,2 ml konz. Schwefelsäure in 150 ml Tetrahydrofuran gelöst. Nach dem Aufheizen wird das Reaktionsgemisch unter Umrühren während 48 Stunden am Rückfluss gehalten. Nach dem Erkalten wird das Polymere durch Eintropfen der Reaktionslösung in 500 ml Diäthyläther ausgefällt. Man erhält 16,0 g (91,6% d.Th. eines hellgelben Polymeren, das 43 Gew.% Azid enthält.

Beispiel 9

Analog der in Beispiel 7 beschriebenen Arbeitsweise werden 3,33 g N-(4-Hydroxyphenyl)-3-azidophthalimid, 10,0 g "Gantrez 119" und 0,15 ml konzentrierte Schwefelsäure in 135 ml Tetrahydrofuran gelöst. Nach dem Aufheizen wird das Reaktionsgemisch unter Umrühren während 24 Stunden am Rückfluss gehalten. Nach dem Erkalten wird das Polymere durch Eintropfen der Reaktionslösung in 700 ml Diäthyläther ausgefällt. Man erhält 12,25 g (92,1% d.Th.) eines hellgelben Polymeren, das 25 Gew.% Azid enthält.

Beispiel 10

Analog der in Beispiel 7 beschriebenen Arbeitsweise werden 3,0 g N-(4-Aminophenyl)-3-azidophthalimid und 6,0 g "Gantrez 119" in 81 ml Tetrahyrofuran gelöst. Das Reaktionsgemisch wird anschliessend während 2 Stunden am Rückfluss gehalten. Nach dem Erkalten wird das Polymere durch Eintropfen der Reaktionslösung in 500 ml Diäthyläther ausgefällt. Man erhält 8,15 g (90,5% d.Th.) eines hellgelben Polymeren, das 33,5 Gew.% Azid enthält.

Beispiel 11

In einer Apparatur der in Beispiel 7 beschriebenen Art werden 2,5 g N-(ω-Carboxypentyl)-3-azido-phthalimid, 2,5 g eines Styrol/Methacrylsäure-glycidylester-Copolymerisats (Molverhältnis 1:1, Molekulargewicht 25 000), d.h. ein Copolymerisat mit wiederkehrenden Strukturelementen der Formel

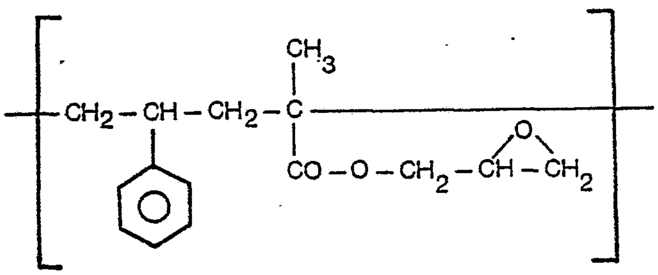

,

und 0,03 g Tetramethylammoniumchlorid in 45 ml Cyclohexanon gelöst. Nach dem Aufheizen des Reaktionsgemisches wird während 1 3/4 Stunden bei 110°C gerührt. Nach dem Abkühlen wird das Polymere durch Eintropfen der Reaktionslösung in 300 ml n-Hexan ausgefällt. Man erhält 4,49 g (89,9% d.Th.) eines hellgelben Polymeren, das 50 Gew.% Azid enthält.

Beispiel 12

In einer Apparatus der in Beispiel 7 beschriebenen Art werden 0,7 g N-(4-Carboxyphenyl)-3-azidophthalimid, 1,4 g eines Methacrylsäuremethylester/Methacrylsäure-glycidylester-Copolymerisats mit wiederkehrenden Strukturelementen der Formel

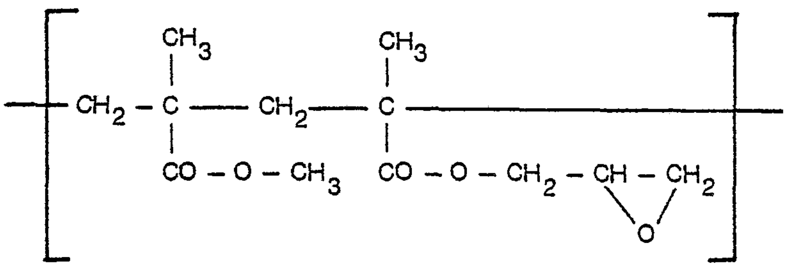

(Molverhältnis 1:1, Molekulargewicht 25 000) und 0,005 g Tetramethylammoniumchlorid in 25 ml Cyclohexanon gelöst. Nach dem Aufheizen wird das Reaktionsgemisch während 2 Stunden bei 110°C gerührt. Durch Eintropfen der Reaktionslösung nach dem Abkühlen in 150 ml n-Hexan wird das

Polymere ausgefällt. Man erhält 1,96 g (93,3% d.Th.) eines hellgelben Polymeren, das 33,5 Gew.% Azid enthält.

Beispiel 13

In 16,8 ml Tetrahydrofuran werden unter Gelblicht 1,0 g N-(2-Hydroxynaphth-8-yl)-3-azidophthalimid, 0,94 g "Gantrez 119" und 0,19 ml Pyridin gelöst und 24 Stunden bei 45—50°C gerührt. Die auf Raumtemperatur gekühlt Suspension wird filtriert, und das Filtrat wird auf 2 Liter Diäthyläther ausgefällt. Die Suspension wird abgenutscht, und das Nutschgut wird bei Raumtemperatur im Vakuum getrocknet. Man erhält 1,8 g (95% d.Th.) Polymer; Analyse C 56,09%, H 4.93%, N 5.42%, Azidgehalt 51,5 Gew.%.

Beispiel 14

In einem 50 ml Rundkolben, der mit Intensivkühler und Trokkenrohr ausgestattet ist, werden in 34,7 ml Tetrahydrofuran unter Gelblicht 2,5 g (N-(1-Aethyl-10,10-dimethyl-11-hydroxyundecyl)-3-azidophthalimid, 1,95 g "Gantrez 119" und 0,39 ml Pyridin gelöst und 24 Stunden bei 45—50°C gerührt. Die auf Raumtemperatur gekühlte Suspension wird filtriert, und das Filtrat wird auf 2 Liter Diäthyläther ausgefällt. Die Suspension wird abgenutscht, und das Nutschgut wird bei Raumtemperatur im Vakuum getrocknet. Man erhält 4,3 g Polymer (96% d.Th.), das 56,2 Gew.% Azid enthält, Analyse C 57,62%, H 7,21%, N 6,72%.

Beispiel 15a

In einem 100 ml Rundkolben, der mit Intensivkühler und Trockenrohr ausgestattet ist, werden unter Gelblich 2,3 g Polyvinylalkohol 4—88 (durchschnittliches Molekulargewicht ca. 13'000, ca. 12% Acetatgruppen) in 20,5 ml wasserfreiem Pyridin gelöst und auf 100°C erhitzt. Das Reaktionsgemisch wird 15 Stunden bei dieser Temperatur gehalten, dann auf 50°C gekühlt und mit 20,5 ml wasserfreiem Pyridin verdünnt. Dann gibt man bei der gleichen Temperatur 0,33 g 1,4-Diazabicyclo[2.2.2]octan, gelöst in 2,1 ml wasserfreiem Pyridin, zu und rührt noch 1 Stunde bei 50°C. Schliesslich gibt man 7,0 g (0,022 Mol) 6-(3-Azidophthalsäureimidyl)-capronsäurechlorid zu und rührt noch während 4,5 Stunden. Das Reaktionsgemisch wird auf Raumtemperatur gekühlt und mit 60 ml Aceton verdünnt. Die entstandene weisse Suspension wird filtriert, und das Filtrat wird auf 1,2 Liter Wasser ausgefällt. Das abgenutschte Produkt wird im Vakuum bei Raumtemperatur über Phosphorpentoxid getrocknet. Man erhält 8,0 g (94% d.Th.) eines Polymeren mit einem Azidgehalt von 75,3 Gew.%; Analyse C 58,74%, H 5,22%, N 15,91%.

Die gemäss den Beispielen 8—15 erhaltenen Polymeren können auf die beschriebene Weise zum Herstellen gedruckter Schaltungen verwendet werden.

Vergleichsbeispiel 15b

Unter Gelblicht werden 4,1 g des obigen Polyvinylalkohols 4—88 in 36,6 ml wasserfreiem Pyridin gelöst und auf 100°C erhitzt. Das Reaktionsgemisch wird 15 Stunden bei dieser Temperatur gehalten, danach auf 50°C gekühlt und mit 36,6 ml wasserfreiem Pyridin verdünnt. Bei dieser Temperatur werden 0,59 g 1,4-Diazabicyclo(2.2.2)octan, gelöst in 3,7 ml wasserfreiem Pyridin zugegeben. Dann wird 1 Stunde bei 50°C ausgerührt. Bei dieser Temperatur werden 7,0 g (0,039 Mol) 4-Azidobenzoylchlorid zugegeben und danach 4,5 Stunden ausgerührt. (Das 4-Azidobenzoylchlorid entspricht dem in dem GB-Patent 843 541 (Beispiel 3) beschriebenen Produkt.)

Das Reaktionsgemisch wird auf Raumtemperatur gekühlt und mit 80 ml Aceton verdünnt. Die weisse Suspension wird filtriert und das Filtrat auf 2 l Wasser ausgefällt. Das abgenutschte Produkt wird im Vakuum bei Raumtemperatur über $P_2O_5$ getrocknet.

Ausbeute: 8,9 g = 92% d.Th.
Analysen: C 54,93%
H 5,09%
N 14,79%

Viskosität: 0,35 dl/g 0,53% in Dimethylformamid bei 25°

Bestrahlt man die Polymere gemäß Beispiel 15a und 15b mit UV-Licht über 320 nm so zeigt das erfindungsgemäße Produkt eine 10 bis 20 mal höhere Lichtempfindlichkeit gegenüber dem Polymer gemäss Beispiel 15b.

Die gemäss den Beispielen 8—15 erhaltenen Polymeren können auf die beschriebene Weise zum Herstellen gedruckter Schaltungen verwendet werden.

Beispiele 16—22

Unter Gelblicht werden 10,42 g (0,035 Mol) N-($\beta$-Methacryloyloxyäthl)-3-azidophthalimid und 2,32 g (0,023 Mol) Acrylsäureäthylester in 50 ml Tetrahydrofuran gelöst und unter Stickstoff auf 70°C erwärmt. In 7 ml Tetrahydrofuran werden 0,127 g Azo-isobutyronitril gelöst und über einen mit Stickstoff gespülten Tropftrichter in die Monomerlösung eingetragen. Das Reaktionsgemisch wird während

7 Stunden bei 70°C ausgerührt, dann auf Raumtemperatur gekühlt, filtriert und auf 1 Liter Diäthyläther ausgefällt. Die leicht gelbliche Suspension wird genutscht, und das erhaltene Produkt wird im Vakuum bei 30°C getrocknet. Ausbeute: 11,85 g = 93% d.Th.; 11,8 Gew.% N; inhärtente Viskosität $\eta$ 0,18 dl/g (c = 0,5 Gew.% in DMF bei 25°C).

Eine kupferbeschichtete Platte (ca. 5 x 10 cm) wird auf einer handelsüblichen Zentrifuge mit einer 10%igen Lösung des obigen Polymeren in DMF (Viskosität ca. 1 Pa s) beschichtet. Die so mit dem Photolack versehene Kupferplatte wird anschliessend bei 60°C in einem Umluftofen getrocknet. Die beschichtete Platte wird durch eine 21-Stufen-Filmnegativ-Vorlage (sog. "21-step sensitivity guide") mit einer 400 Watt Quecksilberhochdrucklampe mit vorgeschaltetem Pyrex-Glasfilter während verschieden langen Zeitintervallen im Abstand von 60 cm belichtet. Die belichtete Platte wird in 1,1,1-Trichloräthan entwickelt und in $FeCl_3$-Lösung angeätzt. Zur Ermittlung der Lichtempfindlichkeit wird jeweils die letzte sichtbare Stufe der Stufenvorlage nach dem Anätzen angegeben:

| Belichtungszeit | Stufe |
|---|---|
| 1 Minute | 0 |
| 3 Minuten | 0—1 |
| 6 Minuten | 4. |

In der folgenden Tabelle sind weitere erfindungsgemässe Polymere angegeben, die auf die oben beschriebene Weise hergestellt und anschliessend auf ihre Lichtempfindlichkeit geprüft wurden.

TABELLE

| Beispiel Nr. | Monomer I | Mol. % | Monomer II | Mol. % | Initiator Gew. % | dl / g 1) | Gew. % N | Belicht. zeit | Stufe 2) |
|---|---|---|---|---|---|---|---|---|---|
| 17 | N-(β-Methacryloyl-oxyäthyl)-3-azido-phthalimid | 100 | | | AIBN 1% 3) | 0,17 | 14,83 | 3 Minut.<br>6 Minut. | 0–1<br>4 |
| 18 | do. | 70 | Methacrylsäure-methylester | 30 | do. | 0,27 | 12,58 | 6 Minut.<br>12 Minut. | 1<br>3 |
| 19 | do. | 60 | Acrylsäure-2-äthyl-hexylester | 40 | do. | 0,09 | 11,53 | 6 Minut.<br>30 Minut. | 0–1<br>6 |
| 20 | do. | 50 | 4-Vinylpyridin | 50 | do. | 0,1 | 12,96 | 6 Minut. | 3 |
| 21 | do. | 50 | N-Vinylpyrrolidon | 50 | do. | | 12,66 | 12 Minut. | 3 |
| 22 | do. | 70 | Essigsäurevinyl-ester | 30 | do. | | | 6 Minut.<br>10 Minut. | 2<br>3 |

1) inhärente Viskosität $\eta$ c = 0,5 Gew. % in DMF bei 25 °C

2) letzte sichbare Stufe nach dem Anätzen mit $FeCl_3$

3) Azo-isobutyronitril

Die in den obigen Beispielen verwendeten Azidophthalimide können wie folgt hergestellt werden:

*a) N-(β-Hydroxyäthyl)-3-azidophthalimid:* Ein Gemisch von 17,9 g (0,076 Mol) N-(β-Hydroxyäthyl)-3-nitrophthalimid und 5,11 g (0,078 Mol) Natriumazid in 70 ml Dimethylsulfoxid wird bei 50°C während 12 Stunden gerührt. Die Lösung wird im Vakuum eingedampft und mit 200 ml Eiswasser verrührt. Die ausgefallenen Kristalle werden abgesaugt, mit 20 ml Wasser nachgewaschen und 24 Stunden bei 70°C/100 Torr getrocknet. Man erhält 17 g (97% d.Th.) N-(β-Hydroxyäthyl)-3-azidophthalimid; Fp. 141°C (Zersetzung). Das als Ausgangsprodukt verwendete N-(β-Hydroxyäthyl)-3-nitrophthalimid kann auf an sich bekannte Weise durch Umsetzung von 3-Nitrophthalsäureanhydrid mit Aethanolamin erhalten werden.

*b) Gemisch von N-(β-Hydroxyäthyl)-3- und -4-azidophthalimid:* Die Herstellung erfolgt analog wie für das N-(β-Hydroxyäthyl)-3-azidophthalimid, wobei man anstelle des reinen 3-Azidophthalimids ein Gemisch von N-(β-Hydroxyäthyl)-3- und -4-nitrophthalsäureimid verwendet.

*c) N-(β-Methacryloyloxyäthyl)-3- und -4-azidophthalimid:* 23,2 g eines Gemisches von N-(β-Hydroxyäthyl)-3- und -4-azidophthalimid und 10,1 g (0,1 Mol) Triäthylamin werden in 250 ml trockenem Dichlormethan gelöst und auf 0°C gekühlt. Zu dieser Lösung werden 10,45 g (0,1) Methacrylsäurechlorid so zugetropft, dass die Temperatur 10°C nicht übersteigt. Nach beendeter Reaktion wird so lange gerührt, bis sich das Reaktionsgemisch auf Raumtemperatur erwärmt hat. Das bei der Reaktion ausgefallene Triäthylaminhydrochlorid wird durch Filtration von der Reaktionslösung abgetrennt. Der Dichlormethanextrakt wird mit Wasser neutral gewaschen, mit Natriumsulfat getrocknet und am Vakuum ohne zu heizen eingeengt. Man erhält 27,65 g (92,2% d.Th.) eines Gemisches von N-(β-Methacryloyloxyäthyl)-3- und -4-azidophthalimid.

*d) N-(β-Acryloyloxyäthyl)-3- und -4-azidophthalimid:* Die Herstellung erfolgt auf analoge Weise wie unter c) beschrieben unter Verwendung von Acrylsäurechlorid anstelle von Methacrylsäurechlorid.

*e) N-(4-Hydroxyphenyl)-3-azidophthalimid:* Ein Gemisch von 55 g (0,193 Mol) 4-(3-Nitrophthalsäureimidyl)-phenol und 13,8 g (0,212 Mol) Natriumazid in 380 ml Dimethylsulfoxid wird 6 Stunden auf 50°C erhitzt. Das Reaktionsgemisch wird im Vakuum bei 80°C eingedampft, und der Rückstand wird mit 1000 ml Wasser während 18 Stunden gerührt. Nach dem Abfiltrieren und Trocknen der erhaltenen Suspension im Trockenschrank bei 60°C über Phosphorpentoxid erhält man 56,6 g (95% d.Th.) N-(4-Hydroxyphenyl)-3-azidophthalimid; Fp. 165°C (Zersetzung).

*f) N-(4-Aminophenyl)-3-azidophthalimid:* Die Herstellung erfolgt auf analoge Weise wie unter e) beschrieben, unter Verwendung von 4-(3-Nitrophthalsäureimidyl)-anilin anstelle des entsprechenden Phenols. Das erhaltene N-(4-Aminophenyl)-3-azidophthalimid hat einen Fp. von 176°C (Zersetzung).

*g) N-(4-Carboxyphenyl)-3-azidophthalimid:* Die Herstellung erfolgt auf analoge Weise wie unter e) beschrieben, unter Verwendung von 4-(3-Nitrophthalsäureimidyl)-benzoesäure anstelle des entsprechenden Phenols und unter Zusatz von Triäthylamin. Das erhaltene N-(4-Carboxyphenyl)-3-azidophthalimid hat einen Fp. von 300°C (Zersetzung).

*h) N-(ω-Carboxypentyl)-3-azidophthalimid:* Die Herstellung erfolgt auf analoge Weise wie unter e) beschrieben, unter Verwendung von 6-(3-Nitrophthalsäureimidyl)-capronsäure anstelle des entsprechenden Phenols und unter Zusatz von Triäthylamin. Das erhaltene N-(ω-Carboxypentyl)-3-azidophthalimid hat einen Fp. von 87—90°C (Zersetzung).

*i) N-(2-Hydroxynaphth-8-yl)-3-azidophthalimid:* Die Herstellung erfolgt auf analoge Weise wie unter e) beschrieben, unter Verwendung von 1-(3-Nitrophthalsäureimidyl)-7-hydroxynaphthalin. Das erhaltene N-(2-Hydroxynaphth-8-yl)-3-azidophthalimid hat einen Fp. von 154°C (Zersetzung).

*k) N-(1-Aethyl-10,10-dimethyl-11-hydroxyundecyl)-3-azidophthalsäureimid:* Die Herstellung erfolgt auf analoge Weise wie unter e) beschrieben, unter Verwendung von N-(1-Aethyl)-10,10-dimethyl-11-hydroxyundecyl)-3-nitrophthalsäureimid. Man erhält 14,7 g (71% d.Th.) N-(1-Aethyl-10,10-dimethyl-11-hydroxyundecyl)-3-azidophthalsäureimid in Form eines zähen, nicht destillierbaren Oels.

*l) 6-(3-Azidophthalsäureimidyl)-capronsäurechlorid:* 15,0 g (0,05 Mol) 6-(3-Azidophthalsäureimidyl)-capronsäure [N-(ω-Carboxypentyl)-3-azidophthalimid] werden unter Gelblicht in 327 g (2,75 Mol) Thionylchlorid gelöst und auf 80°C erwärmt. Bei dieser Temperatur gibt man 0,5 ml N,N-Dimethylformamid zu. Das Reaktionsgemisch wird während 15 Minuten bei 80°C gerührt und dann auf Raumtemperatur abgekühlt. Die erhaltene Suspension wird unter Stickstoff abgenutscht. Nach dem Umkristallisierendes Rohprodukts aus 250 ml trokkenem Ligroin erhält man 12,5 g (75,4% d.Th.) 6-(3-Azidophthalsäureimidyl)-capronsäurechlorid; Fp. 68—69°C.

Beispiel 23

Das gemäss Beispiel 6 erhaltene Polymere wird in einem photographischen Schichtverband geprüft. Zuerst wird eine Giesslösung folgender Zusammensetzung zubereitet:

| | |
|---|---|
| — Gelatine | 2 g/m² |
| — Polymeres gemäss Beispiel 6 | 1 g/m² |
| — Benetzungsmittel (Polyäthylenoxid-Stearat) | 20 Gew.%, bezogen auf das Gewicht des Polymeren |
| — Photosensibilisator (2-p-Methoxybenzyl-6'- und -7'-sulfochinoxalin) | 4 Gew.%, bezogen auf das Gewicht des Polymeren |
| — Härter (2-Hydroxy-6-amino-s-triazin-4-N-methylmorpholinium-Tetrafluorborat) | 8 Gew.%, bezogen auf das Gewicht des Polymeren. |

Diese Giesslösung wird auf einen transparenten Träger, d.h. auf eine Polyester-Folie, gegossen. Nach dem Aushärten der Gelatine wird der Film durch ein Raster-Negativ (Stufenkeil mit 12 Stufen) während 15 Minuten mit einer 400 Watt Hochdrucklampe belichtet. Die nicht belichteten Anteile werden während 20 Sekunden in 20°C warmem Wasser ausgewaschen. Das vernetzte Polymere wird mit einem kationischen Farbstoff, z.B. dem Farbstoff der Formel

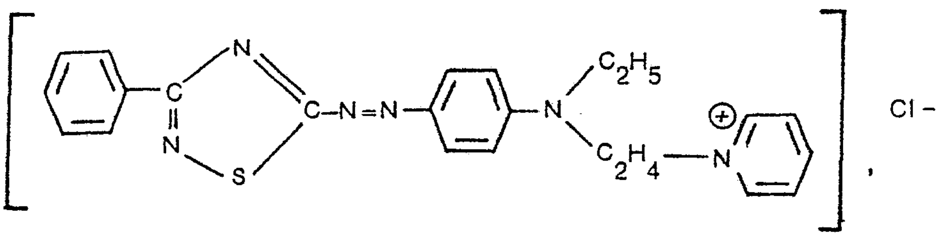

,

aus wässriger Lösung angefärbt bzw. sichtbar gemacht, wobei sämtliche 12 Stufen des Stufenkeils wiedergegeben werden.

Vergleichsbeispiel

Auf die in Beispiel 7 beschriebene Weise wird N-(β-Hydroxyäthyl)-3-azidophthalimid mit einem Maleinsäureanhydrid-Polymeren ("Gantrez AN", Handelsprodukt der Fa. GAF) zu einem Polymeren mit wiederkehrenden Strukturelementen der Formel

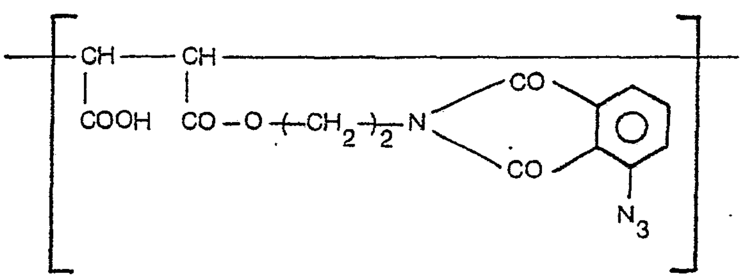

(A) umgesetzt.

Dasselbe Maleinsäureanhydrid-Polymere wird auf analoge Weise mit 3-Azidophthalsäure-mono-β-hydroxyäthylester zu einem Polymeren mit wiederkehrenden Strukturelementen der Formel

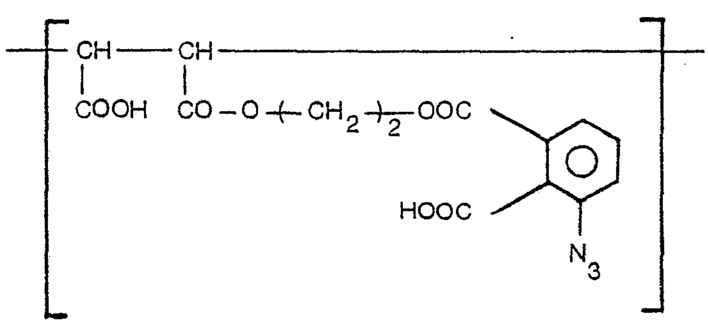

(B)

umgesetzt. Bestrahlt man die Polymeren (A) und (B) mit UV-Licht von über 320 nm, so zeigt das Polymere (A) gegenüber dem Polymeren (B) eine 5—10mal höhere Lichtempfindlichkeit.

## Patentansprüche

1. Ein unter der Einwirkung von Licht vernetzbares Polymeres, das seitenständige Azidophthalimidylgruppen der Formel I

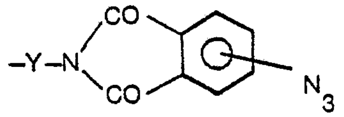

(I)

aufweist, worin

Y unsubstituiertes oder substituiertes Alkylen mit 2—18 C-Atomen, eine unsubstituierte oder substituierte Phenylen-, Naphthylen-, Biphenylen-, Cyclohexylen- oder Dicyclohexylmethangruppe oder eine unsubstituierte oder substituierte Gruppierung

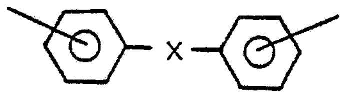

und

X —O—, —S—, $—SO_2—$, $—CH_2—$, 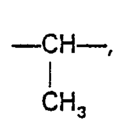, —CO— oder 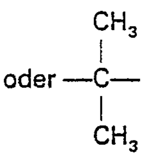 bedeuten,

wobei der Anteil an Azidophthalimidylgruppen der Formel I mindestens 10 Prozent, bezogen auf die Anzahl der wiederkehrenden Strukturelemente des Polymeren, beträgt.

2. Ein Polymeres nach Anspruch 1, worin die $N_3$-Gruppe in Formel I in 3-Stellung an den Benzolring gebunden ist.

3. Ein Polymeres nach Anspruch 1, worin Y in Formel I eine unsubstituierte oder durch eine oder zwei Phenylgruppen, Cycloalkylgruppen mit 5—8 C-Atomen oder Aralkylgruppen mit 7 oder 8 C-Atomen substituierte Alkylengruppen mit 2—18 C-Atomen oder unsubstituiertes oder pro Ring durch ein Halogenatom, eine Alkylgruppe mit 1—4 C-Atomen, eine Cycloalkylgruppe mit 5—7 C-Atomen oder eine Aralkylgruppe mit 7 oder 8 C-Atomen substituiertes Phenylen, Naphthylen, Biphenylen, Cyclohexylen, Dicyclohexylmethan oder

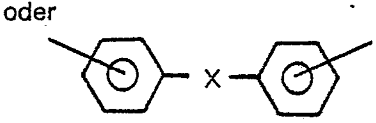

darstellt und X die unter Formel I angegebene Bedeutung hat.

4. Ein Polymeres nach Anspruch 1, das wiederkehrende Strukturelemente der Formel II oder III

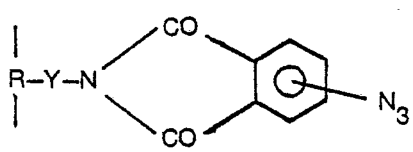

oder

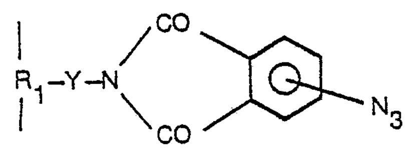

(II) (III)

aufweist, worin Y die unter Formel I angegebene Bedeutung hat,

R 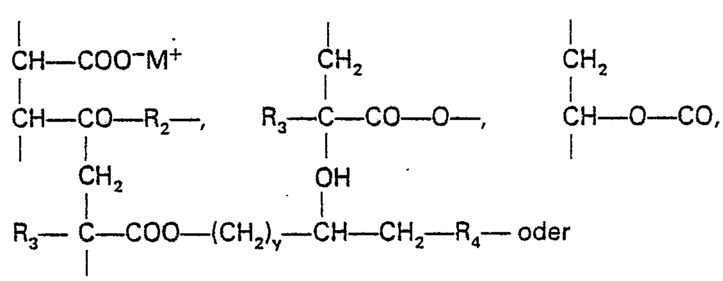

oder

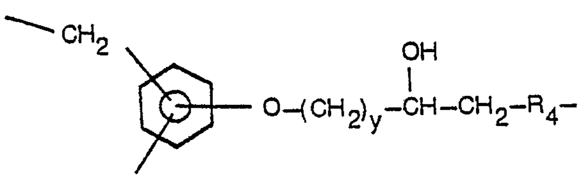

, $R_1$ 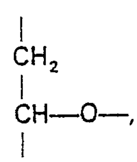

$R_2$ —O—, —NH— oder —N-Alkyl mit 1—4 C-Atomen,
$R_3$ Wasserstoff oder Methyl,
$R_4$ —O—CO—, —NH—, —N-Alkyl mit 1—4 C-Atomen oder —O—,
$M^+$ das Wasserstoffion, ein Alkalimetallkation, das Pyridiniumkation oder

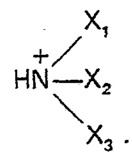

$X_1$ und $X_2$ unabhängig voneinander Wasserstoff oder Alkyl mit 1—12 C-Atomen, $X_3$ Wasserstoff, Alkyl mit 1—12 C-Atomen oder Benzyl und y die Zahl 1 oder 2 bedeuten, wobei der Anteil an Gruppierungen

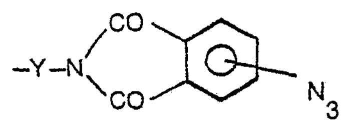

mindestens 10 Prozent und bevorzugt mindestens 30 Prozent, bezogen auf die Anzahl der wiederkehrenden Strukturelemente des Polymeren beträgt.

5. Ein Polymeres nach Anspruch 4 mit wiederkehrenden Strukturelementen der Formel II, worin Y unsubstituiertes Alkylen mit 2—18 und insbesondere 2—16 C-Atomen, Cyclohexylen, Naphthylen oder Phenylen, R eine Gruppierung

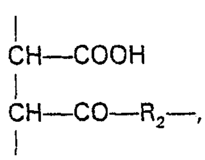, 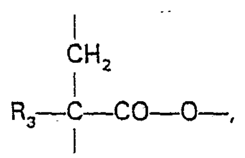, 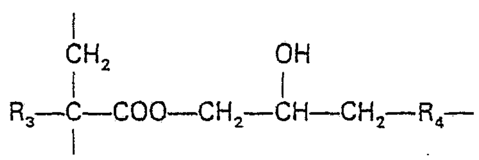 oder

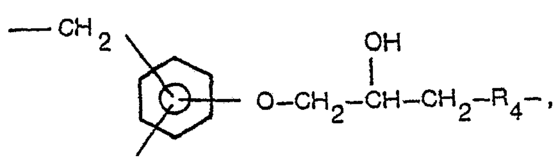,

$R_2$ —NH— und insbesondere —O— und $R_4$ —NH— und insbesondere —O—CO bedeuten, wobei der Anteil an Strukturelement der Formel II mindestens etwa 30%, bezogen auf die Gesamtzahl der wiederkehrenden Strukturelemente des Polymeren, beträgt.

6. Ein Polymeres nach Anspruch 4 mit wiederkehrenden Strukturelementen der Formel III, worin $R_1$ die angegebene Bedeutung hat und Y Alkylen mit 1—4 C-Atomen darstellt, wobei der Anteil an Strukturelementen der Formel III mindestens etwa 30%, bezogen auf die Gesamtzahl der wiederkehrenden Strukturelemente des Polymeren, beträgt.

7. Ein Polymeres nach Anspruch 4, das aus wiederkehrenden Strukturelementen der Formel II oder III und wiederkehrenden Strukturelementen der Formel VIa

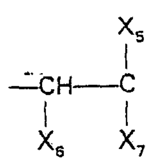 (VIa)

besteht, worin $X_6$ Wasserstoff, $X_5$ Wasserstoff, Chlor oder Methyl und $X_7$ Wasserstoff, Methyl, Chlor, —CN, —COOH, —$CONH_2$, Phenyl, Methylphenyl, Methoxyphenyl, Cyclohexyl, Pyridyl, Imidazolyl, Pyrrolidonyl, —COO-Alkyl mit 1—12 C-Atomen im Alkylteil, —COO-Phenyl,

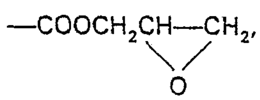,

—COO-Alkyl-OH mit 1—3 C-Atomen im Alkyl, —COO—$R_5$—$(OOC—C(R_3)=CH_2)_z$, worin $R_5$ einen geradkettigen oder verzweigten gesättigten aliphatischen Rest mit 1—10 C-Atomen, $H_3$ Wasserstoff

oder Methyl und z eine ganze Zahl von 1—3 bedeuten; $X_7$ ferner —OCO-Alkyl mit 1—4 C-Atomen im Alkyl, —OCO-Phenyl, —CO-Alkyl mit 1—3 C-Atomen im Alkyl, Alkoxy mit 1—6 C-Atomen, Phenoxy, $-CH=CH_2$ oder

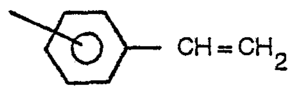

oder $X_5$ Wasserstoff und $X_6$ und $X_7$ zusammen die Gruppierung

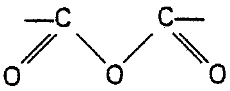

oder je —COOH oder —COO-Alkyl mit 1—6 C-Atomen im Alkyl darstellen.

8. Ein Polymeres nach Anspruch 7, das Strukturelemente der Formel VIa enthält, worin $X_6$ Wasserstoff, $X_5$ Wasserstoff oder Methyl und $X_7$ $-OCOCH_3$, —COOH oder —COOAlkyl mit 1—8 C-Atomen im Alkyl bedeuten oder worin $X_5$ und $X_6$ je Wasserstoff und $X_7$ —CN, Chlor, Phenyl oder Styryl bedeuten.

9. Ein Verfahren zur Herstellung eines Polymeren mit seitenständigen Azidophthalimidylgruppen der Formel I nach Anspruch 1, dadurch gekennzeichnet, dass man entweder eine Verbindung der Formel IV

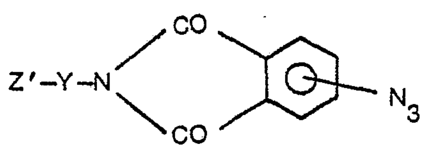

(IV),

worin Y die unter Formel I angegebene Bedeutung hat und Z' —OH, —COOH, —COCl, $-NH_2$ oder —NH-Alkyl mit 1—4 C-Atomen bedeutet,
mit einem Polymeren mit entsprechenden funktionellen Gruppen in einem Verhältnis von 1:10 bis 1:1, bezogen auf die Anzahl der wiederkehrenden Strukturelemente im Polymeren, zur Reaktion bringt, oder eine Verbindung der Formel V

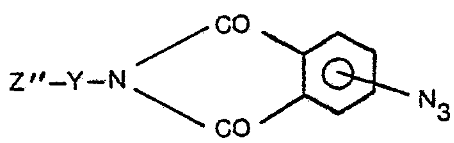

(V),

worin Y die unter Formel I angegebene Bedeutung hat und

Z'' $-O-CH=CH_2$, 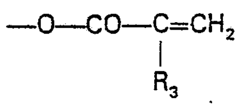 oder $-COO-CH=CH_2$ und

$R_3$ Wasserstoff oder Methyl bedeuten.
gegebenenfalls in Gegenwart von äthylenisch ungesättigten Comonomeren polymerisiert, wobei das Mol-Verhältnis von Verbindung der Formel V zu Comonomerem 1:10 bis 1:0 beträgt und die Polymerisation vorzugsweise in Lösung radikalisch erfolgt.

10. Ein Verfahren nach Anspruch 9 zur Herstellung eines Polymeren nach Anspruch 4, das wiederkehrende Strukturelemente der Formel II aufweist, worin

R eine Gruppierung 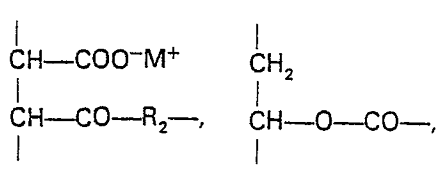

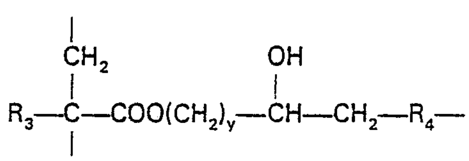 oder 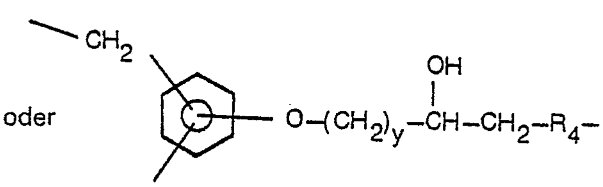 ,

bedeuten und $M^+$, $R_2$, $R_3$, $R_4$ und y die unter Formel II angegebene Bedeutung haben, dadurch gekennzeichnet, dass man

(a) eine Verbindung der Formel IVa

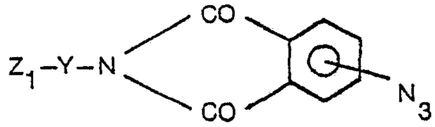

(IVa),

worin Y die unter Formel II angegebene Bedeutung hat und

$Z_1$ —OH, —$NH_2$ oder —NH-Alkyl mit 1—4 C-Atomen darstellt, mit einem Polymeren mit wiederkehrenden Strukturelementen

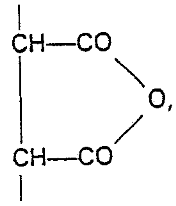

(b) eine Verbindung der Formel IVb

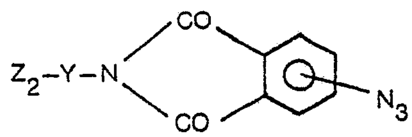

(IVb),

worin Y die unter Formel II angegebene Bedeutung hat und $Z_2$ —COCl oder —COOH darstellt, mit einem Polymeren mit wiederkehrenden Strukturelementen

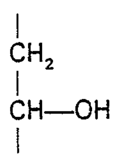

oder

(c) eine Verbindung der Formel IVc

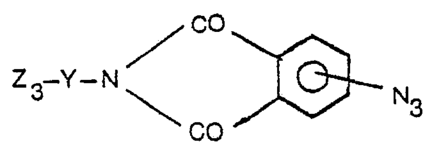

(IVc),

worin Y die unter Formel II angegebene Bedeutung hat und $Z_3$ —COOH, —OH, —$NH_2$ oder —NH-Alkyl mit 1—4 C-Atomen bedeutet, mit einem Polymeren mit wiederkehrenden Strukturelementen

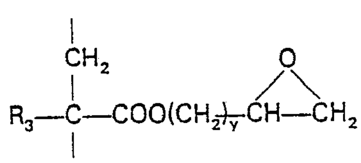

oder

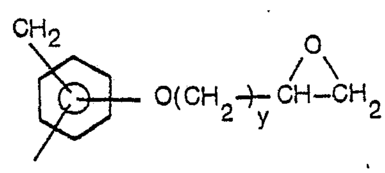

zur Reaktion bringt, und Polymere, worin $M^+$ das Wasserstoffion darstellt, gegebenenfalls in definitionsgemässe Salze überführt, wobei $R_3$ und y die unter Formel II angegebene Bedeutung haben und die Verbindungen der Formel IVa, IVb oder IVc in einem Verhältnis von 1:10 bis 1:1, bevorzugt 3:10 bis 1:1, bezogen auf die Gesamtzahl der wiederkehrenden Strukturelemente des Polymeren, eingesetzt werden.

11. Ein Verfahren nach Anspruch 9 zur Herstellung eines Polymeren nach Anspruch 1 oder 4, das wiederkehrende Strukturelemente der Formeln II oder III aufweist, worin

R 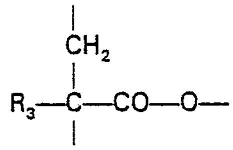 oder 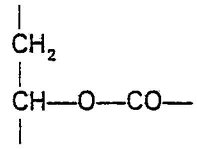 und

$R_1$ 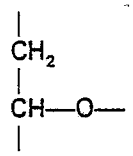

bedeuten und $R_3$ die unter Formel II angegebene Bedeutung hat, dadurch gekennzeichnet, dass man eine Verbindung der Formel Va

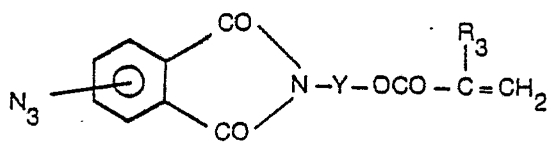 (Va),

Vb

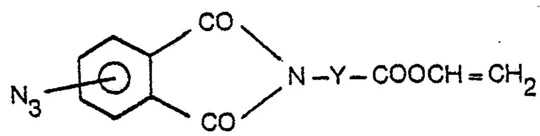 (Vb)

oder
Vc

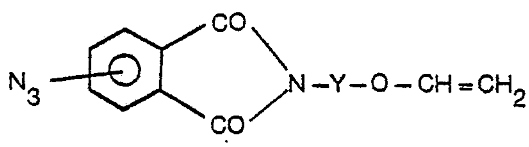 (Vc),

worin Y und $R_3$ die unter Formel II angegebene Bedeutung haben, gegebenenfalls in Gegenwart von äthylenisch ungesättigten Comonomeren polymerisiert, wobei das Mol-Verhältnis von Verbindung der Formel Va, Vb oder Vc, zu Comonomeren, 1:10 bis 1:0, bevorzugt 3:10 bis 1:0, beträgt und die Polymerisation vorzugsweise in Lösung radikalisch erfolgt.

12. Ein Verfahren nach Anspruch 11, dadurch gekennzeichnet, dass man als Comonomeres ein solches der Formel VI

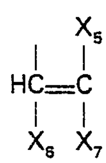 (VI)

verwendet, worin $X_5$, $X_6$ und $X_7$ die in Anspruch 7 genannte Bedeutung haben.

13. Verwendung eines Polymeren nach einem der vorhergehenden Ansprüche 1—12 zum Erzeugen von Abbildungen.

**Claims**

1. A photo-crosslinkable polymer having azido-phthalimidyl side groups of the formula I

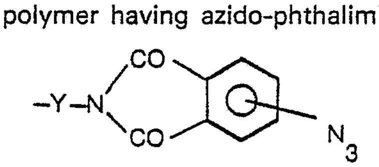 (I)

in which Y is unsubstituted or substituted alkylene having 2—18 C atoms, an unsubstituted or

substituted phenylene, naphthylene, biphenylene, cyclohexylene or dicyclohexylmethane group or an unsubstituted or substituted

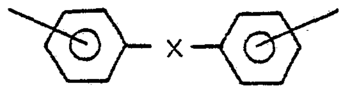 group and

X is —O—, —S—, $—SO_2—$, $—CH_2—$, 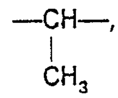, —CO— or 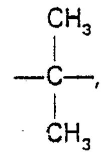,

the proportion of azidophthalimidyl groups of the formula I being at least 10 per cent, relative to the number of recurring structural units of the polymer.

2. A polymer according to claim 1, in which the $N_3$ group in formula I is linked to the 3-position of the benzene ring.

3. A polymer according to claim 1, in which Y in formula I is an alkylene group, having 2—18 C atoms, which is unsubstituted or substituted by one or two phenyl groups, cycloalkyl groups having 5—8 C atoms or aralkyl groups having 7 or 8 C atoms, or is phenylene, naphthylene, biphenylene, cyclohexylene, dicyclohexylmethane or

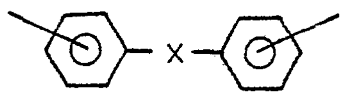

which are unsubstituted or substituted, per ring, by one halogen atom, one alkyl group having 1—4 C atoms, one cycloalkyl group having 5—7 C atoms or one aralkyl group having 7 or 8 C atoms, and X is as defined under formula I.

4. A polymer according to claim 1, which has recurring structural units of the formula II or III

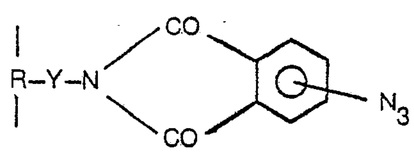 or 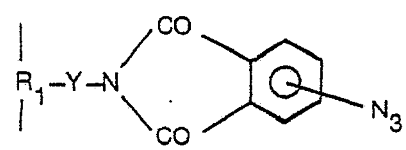

(II) (III)

in which Y is as defined under formula I,

R is 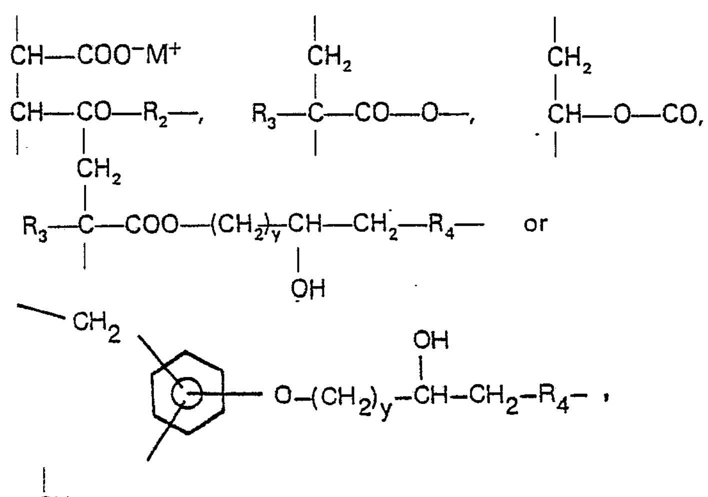

R₁ is 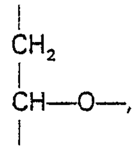, $R_2$ is —O—, —NH— or 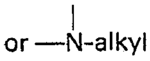

having 1—4 C atoms, $R_3$ is hydrogen or methyl, $R_4$ is —O—CO—, —NH—, 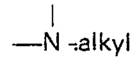 having

1—4 C atoms or —O—, $M^+$ is a hydrogen ion, an alkali metal cation, the pyridinium cation or

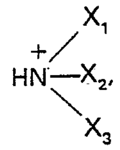

$X_1$ and $X_2$ independently of one another are hydrogen or alkyl having 1—12 C atoms, $X_3$ is hydrogen, alkyl having 1—12 C atoms or benzyl and y is 1 or 2, and the proportion of

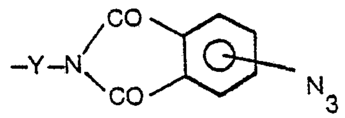

groups is at least 10 per cent and preferably at least 30 per cent, relative to the number of recurring structural units of the polymer.

5. A polymer according to claim 4, having recurring structural units of the formula II, in which Y is unsubstituted alkylene having 2—18, and especially 2—16, C atoms, cyclohexylene, naphthylene or phenylene, R is a

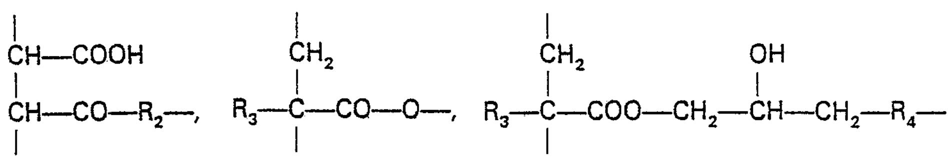 or

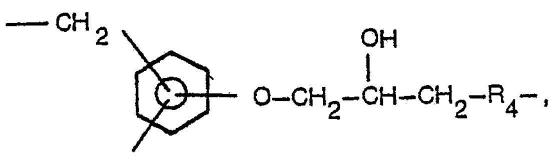

group, $R_2$ is —NH— and especially —O— and $R_4$ is —NH— and especially —O—CO—, the proportion of structural units of the formula II being at least about 30%, relative to the total number of recurring structural units of the polymer.

6. A polymer according to claim 4 having recurring structural units of the formula III, in which $R_1$ has the given meaning, and Y is alkylene having 1—4 C atoms, the proportion of structural units of the formula III being at least about 30%, relative to the total number of recurring structural units of the polymer.

7. A polymer according to claim 4, which consists of recurring structural units of the formula II or III and recurring structural units of the formula VIa

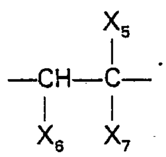 (VIa)

in which $X_6$ is hydrogen, $X_5$ is hydrogen, chlorine or methyl and $X_7$ is hydrogen, methyl, chlorine, —CN, —COOH, —$CONH_2$, phenyl, methylphenyl, methoxyphenyl, cyclohexyl, pyridyl, imidazolyl, pyrrolidonyl, —COO-alkyl having 1—12 C atoms in the alkyl moiety, —COO-phenyl,

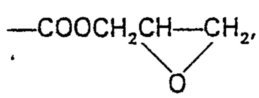

—COO-alkyl-OH having 1—3 C atoms in the alkyl moiety, $—COO—R_5—(OOC—\underset{R_3}{C}=CH_2)_z$,

(in which $R_5$ is a straight-chain or branched saturated aliphatic radical having 1—10 C atoms, $R_3$ is hydrogen or methyl and z is an integer from 1 to 3; $X_7$ is also —OCO-alkyl having 1—4 C atoms in the

alkyl moiety, —OCO-phenyl, —CO-alkyl having 1—3 C atoms in the alkyl moiety, alkoxy having 1—6 C atoms, phenoxy, $—CH{=}CH_2$ or

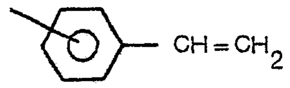

or $X_5$ is hydrogen and $X_6$ and $X_7$ together are the

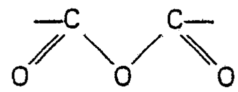

group or are each —COOH or —COO-alkyl having 1—6 C atoms in the alkyl moiety.

8. A polymer according to claim 7, which contains structural units of the formula VIa, in which $X_6$ is hydrogen, $X_5$ is hydrogen or methyl and $X_7$ is $—OCOCH_3$, —COOH or —COOalkyl having 1—8 C atoms in the alkyl moiety or in which $X_5$ and $X_6$ are each hydrogen and $X_7$ is —CN, chlorine, phenyl or styryl.

9. A process for the preparation of a polymer having azidophthalimidyl side groups of the formula I according to claim 1, which comprises either reacting a compound of the formula IV

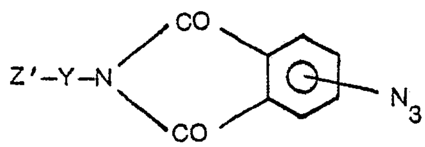

(IV)

in which Y is as defined under formula I, and Z' is —OH, —COOH, —COCl, $—NH_2$ or —NH-alkyl having 1—4 C atoms, with a polymer with corresponding functional groups in a ratio of 1:10 to 1:1, relative to the number of recurring structural units in the polymer, or polymerising a compound of the formula V

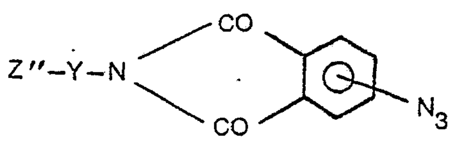

(V)

in which Y is as defined under formula I and Z'' is $—O—CH{=}CH_2$, 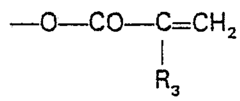

or $—COO—CH{=}CH_2$ and $R_3$ is hydrogen or methyl, in the presence or absence of ethylenically unsaturated comonomers, the molar ratio of the compound of the formula V to the comonomer being from 1:10 to 1:0 and the polymerisation preferably being carried out as a free radical polymerisation in solution.

10. A process according to claim 9 for the preparation of a polymer according to claim 4, which contains recurring structural units of the formula II, in which R is a

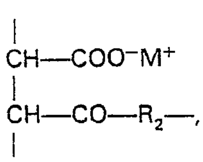 , 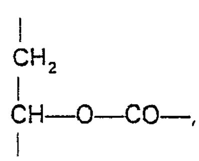 , 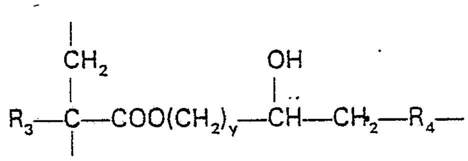 or

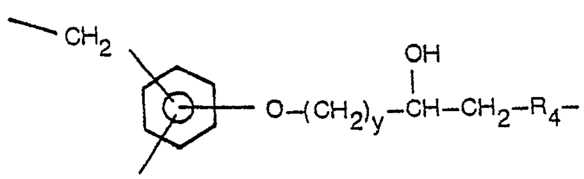 ,

group and $M^+$, $R_2$, $R_3$, $R_4$ and y are as defined under formula II, which process comprises

(a) reacting a compound of the formula IVa

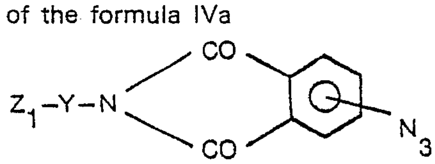

(IVa)

in which Y is as defined under formula II and $Z_1$ is —OH, —$NH_2$ or —NH-alkyl having 1—4 C atoms, with a polymer having recurring structural units

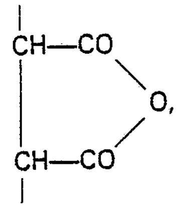

(b) reacting a compound of the formula IVb

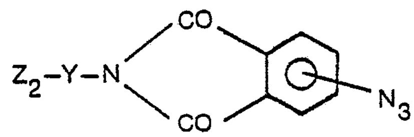

(IVb)

in which Y is as defined under formula II and $Z_2$ is —COCl or —COOH, with a polymer having recurring structural units

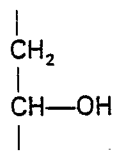 or

(c) reacting a compopund of the formula IVc

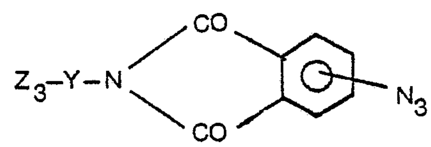

(IVc)

in which Y is as defined under formula II and $Z_3$ is —COOH, —OH, —$NH_2$ or —NH-alkyl having 1—4 C atoms, with a polymer having recurring structural units

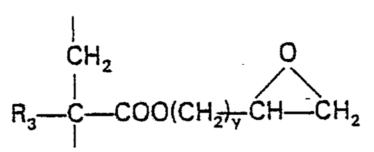 or 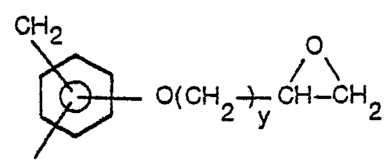

polymers in which $M^+$ is a hydrogen ion being, if desired, converted to salts according to the definition given, $R_3$ and y being as defined under formula II, and the compounds of the formula IVa, IVb or IVc being employed in a ratio of 1:10 to 1:1, preferably 3:10 to 1:1, relative to the total number of recurring structural units of the polymer.

11. A process according to claim 9 for the preparation of a polymer according to either of claims 1 or 4, which contains recurring structural units of the formulae II or III, in which R is

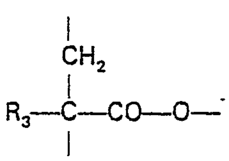 or 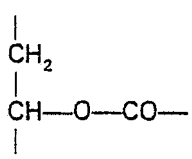 and $R_1$ is 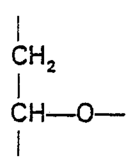

and $R_3$ is as defined under formula II, which process comprises polymerising a compound of the formula Va

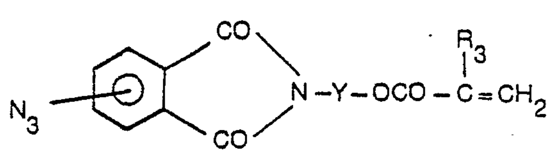

(Va)

or of the formula Vb

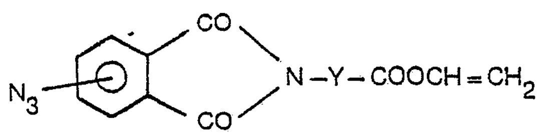

(Vb)

or of the formula Vc

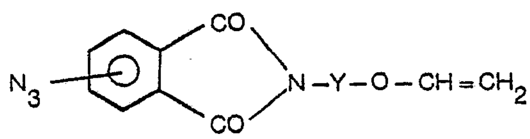

(Vc)

in which Y and $R_3$ are as defined under formula II, in the presence or absence of ethylenically unsaturated comonomers, the molar ratio of the compound of the formula Va, Vb or Vc to the comonomer being 1:10 to 1:0, preferably 3:10 to 1:0, and the polymerisation preferably being carried out as a free radical polymerisation in solution.

12. A process according to claim 11, wherein the comonomer used has the formula VI

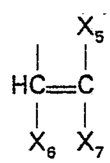

(VI)

in which $X_5$, $X_6$ and $X_7$ are as defined in claim 7.

13. The use of a polymer according to any one of the preceding claims 1—12 for making reproductions.

## Revendications

1. Polymère réticulable sous l'effet de la lumière, caractérisé en ce qu'il présente des groupes azidophtalimidyles latéraux de formule I:

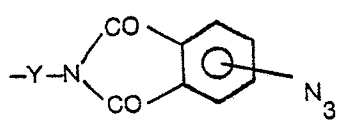

(I)

(dans laquelle

Y représente un groupe alkylène ayant 2 à 18 atomes de carbone, non substitué ou substitué, un groupe phénylène, naphtylène, biphénylène, cyclohexylène ou dicyclohexylméthane non substitué ou substitué, ou un groupement

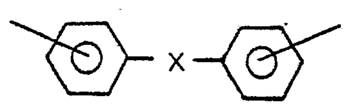

substitué ou non substitué, et

X représente —O—, —S—, $—SO_2—$, $—CH_2—$, 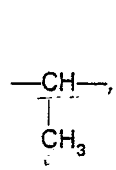, —CO— ou 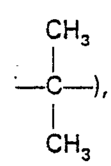),

la proportion des groups azidophtalimidyles de formule I s'élévant à au moins 10%, par rapport au nombre des motifs récurrents de la structure du polymère.

2. Polymère selon la revendication 1, caractérisé en ce que le groupe $N_3$ de la formule I se trouve fixé en position 3 sur le noyau benzénique.

3. Polymère selon la revendication 1, caractérisé en ce que Y représente dans la formule I un groupe alkylène ayant 2 à 18 atomes de carbone, non substitué ou substitué par un ou deux groupes phényles, groupes cycloalkyles ayant 5 à 8 atomes de carbone ou groupes aralkyles ayant 7 ou 8

atomes de carbone, ou représente un groupe phénylène, naphtylène, biphénylène, cyclohexylène, dicyclohexylméthane ou

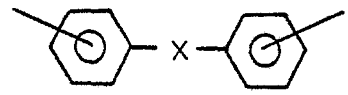

(non substitué ou comportant, par cycle, un substituant qui est un atome d'halogène, un groupe alkyle ayant 1 à 4 atomes de carbone, un groupe cycloalkyle ayant 5 à 7 atomes de carbone ou un groupe aralkyle ayant 7 ou 8 atomes de carbone), et X a le sens indiqué pour la formule I.

4. Polymère selon la revendication 1, caractérisé en ce qu'il présente le motif récurrent de structure répondant à la formule II ou III

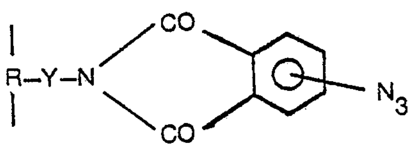 ou 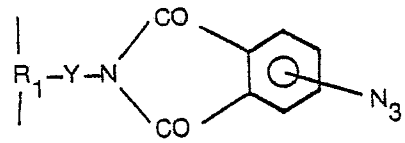

(II) (III)

(dans lesquelles Y a le sens indiqué pour la formule I;

R représente 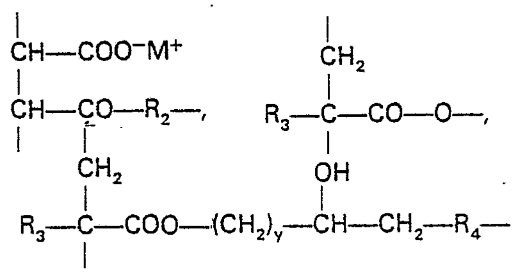 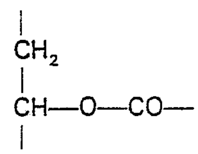

ou

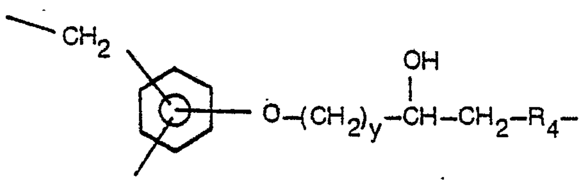 ,

$R_1$ représente 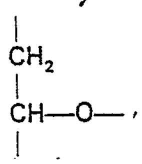

$R_2$ représente —O—, —NH— ou —N-Alkyle comportant 1 à 4 atomes de carbone,
$R_3$ représente un atome d'hydrogène ou un groupe méthyle,
$R_4$ représente —O—CO—, —NH—, —N-alkyle ayant un à quatre atomes de carbone ou —O—,
$M^+$ représente l'ion hydrogène, un cation de métal alcalin, le cation pyridinium ou

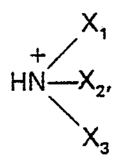

$X_1$ et $X_2$ représentent, indépendamment l'un de l'autre, un atome d'hydrogène ou un groupe alkyle ayant 1 à 12 atomes de carbone, $X_3$ représente un atome d'hydrogène, un groupe alkyle ayant 1 à 12 atomes de carbone ou un groupe benzyle, et y est le nombre 1 ou 2, la proportion des groupements

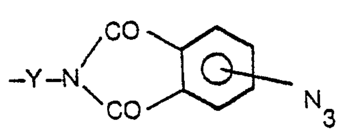

s'élevant à au moins 10% et de préférence à au moins 30%, par rapport au nombre des motifs récurrents de la structure du polymère).

5. Polymère selon la revendication 4, caractérisé en ce qu'il comporte des motifs récurrents de structure de formule II, dans laquelle Y représente un groupe alkylène non substitué comportant 2 à 18 et en particulier 2 à 16 atomes de carbone, un groupe cyclo hexylène, naphtylène ou phénylène; R représente un groupement

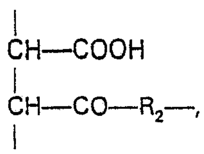 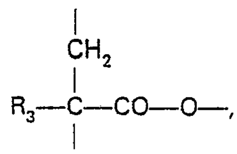 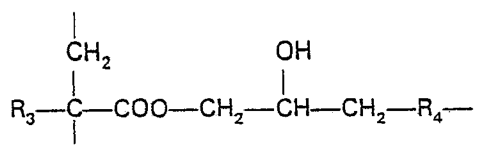 ou

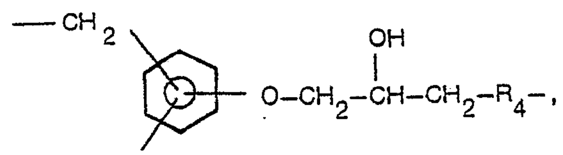

$R_2$ représente —NH— et en particulier —O— et $R_4$ représente —NH— et en particulier —O—CO—, la proportion des motifs de structure de formule II s'élevant à au moins 30% environ, par rapport au nombre total des motifs récurrents de la structure du polymère.

6. Polymère selon la revendication 4, caractérisé en ce qu'il comporte des motifs récurrents de structure de formule III, dans laquelle $R_1$ a le sens indiqué et Y représente un groupe alkylène ayant 1 à 4 atomes de carbone, la proportion des motifs de structure de formule III s'élevant à au moins 30%, par rapport au nombre total des motifs récurrents de la structure du polymère.

7. Polymère selon la revendication 4, caractérisé en ce qu'il consiste en des motifs récurrents de structure de formules II ou III et en des motifs récurrents de structure de formule VIa.

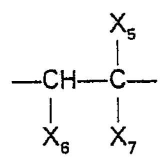

(VIa)

(dans laquelle $X_6$ est un atome d'hydrogène; $X_5$ est un atome d'hydrogène ou de chlore ou un groupe méthyle et $X_7$ est un atome d'hydrogène, un groupe méthyle, un atome de chlore ou un groupe —CN, —COOH, —$CONH_2$, phényle, méthylphényle, méthoxyphényle, cyclohexyle, pyridyle, imidazolyle, pyrrolidonyle, —COO-alkyle ayant 1 à 12 atomes de carbone dans la partie alkyle, —COO-phényle,

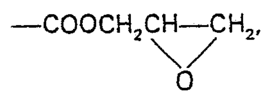

—COO-alkyl-OH ayant 1 à 3 atomes de carbone dans le groupe alkyle, —COO—$R_5$—(COO—C($R_3$)=$CH_2$)$_z$, (dans laquelle $R_5$ est un radical aliphatique saturé, linéaire ou ramifié, ayant 1 à 10 atomes de carbone; $R_3$ est un atome d'hydrogène ou un groupe méthyle et z est un nombre entier valent 1 à 3); $X_7$ pouvant en outre représenter un groupe —OCO-alkyle ayant 1 à 4 atomes de carbone dans le groupe alkyle, —OCO-phényle, —CO-alkyle ayant 1 à 3 atomes de carbone dans le groupe alkyle, alcoxy ayant 1 à 6 atomes de carbone, phénoxy, —CH=$CH_2$ ou

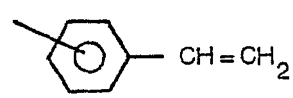

ou bien $X_5$ représente un atome d'hydrogène et $X_6$ et $X_7$ forment ensemble le groupement

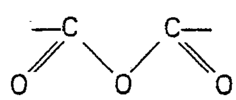

ou bien représentent chacun —COOH ou —COO-alkyle ayant 1 à 6 atomes de carbone dans le groupe alkyle.

8. Polymère selon la revendication 7, caractérisé en ce qu'il contient le motif de structure de formule VIa, dans laquelle $X_6$ est un atome d'hydrogène, $X_5$ est un atome d'hydrogène ou un groupe

méthyle, et $X_7$ représente —$OCOCH_3$, —COOH ou —COOalkyle comportant 1 à 8 atomes de carbone dans le groupe alkyle, ou bien $X_5$ et $X_6$ représentent chacun un atome d'hydrogène et $X_7$ est un groupe —CN, un atome de chlore, un groupe phényle ou styryle.

9. Procédé de production d'un polymère comportant des groupes azidophtalimidyles latéraux de formule I, selon la revendication 1, procédé caractérisé en ce qu'on fait réagir un composé de formule IV

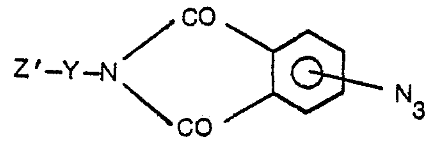

(IV)

(dans laquelle Y a le sens indiqué pour la revendication 1, et

Z' représente —OH, —COOH, —COCl, —$NH_2$ ou —NH-alkyle ayant 1 à 4 atomes de carbone), avec un polymère comportant des groupes fonctionnels correspondants, selon un rapport compris entre 1:10 et 1:1, par rapport au nombre des motifs récurrents de la structure du polymère, ou bien l'on polymérise un composé de formule V

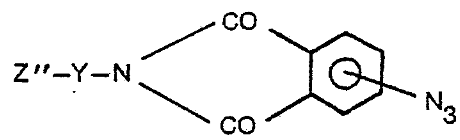

(V)

(dans laquelle Y a le sens indiqué pour la formule I, et Z'' représente —O—CH=$CH_2$,

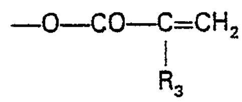

ou —COO—CH=$CH_2$, et $R_3$ représente un atome d'hydrogène ou un groupe méthyle, éventuellement en présence de comonomères à insaturation éthylénique, le rapport molaire du composé de formule V au comonomère se situant entre 1:10 et 1:0 et la polymérisation étant effectuée de préférence par voie radicalaire en solution.

10. Procédé selon la revendication 9 pour produire un polymère selon la revendication 9 pour produire un polymère selon la revendication 4, polymère qui présente des motifs récurrents de structure de formule II (dans laquelle:

R représente un groupement

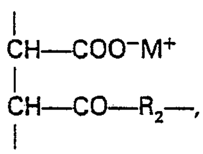 , 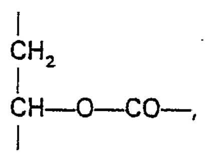 , 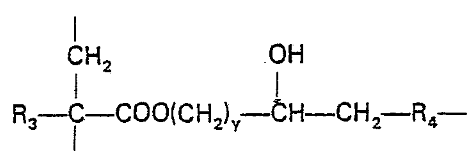 ou

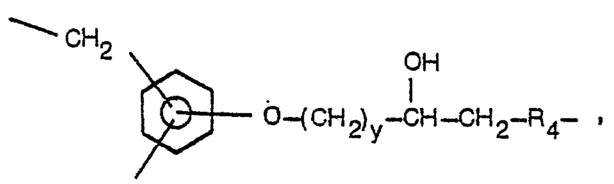 ,

et $M^+$, $R_2$, $R_3$, $R_4$ et y ont le sens indiqué pour la formule II), procédé caractérisé en ce que l'on fait réagir:

(a) un composé de formule IVa

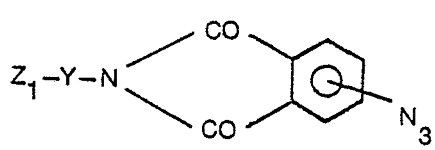

(IVa)

(dans laquelle Y a le sens indiqué pour la formule II, et $Z_1$ représente —OH, —$NH_2$ ou —NH-alkyle ayant 1 à 4 atomes de carbone)

avec un polymère comportant des motifs récurrents de structure

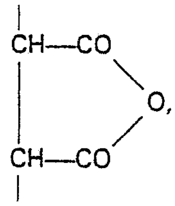

(b) un composé de formule IVb

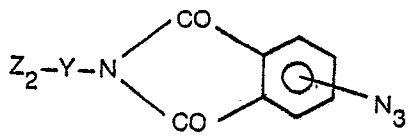

(IVb)

(dans laquelle Y a le sens indiqué pour la formule II, et $Z_2$ représente —COCl ou —COOH) avec un polymère comportant des motifs récurrents de structure

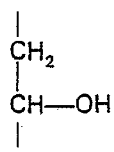
ou

(c) un composé de formule IVc

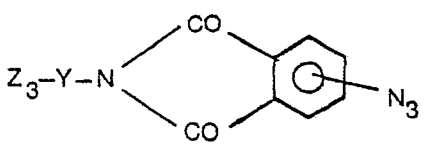

(IVc)

(dans laquelle Y a le sens indiqué pour la formule II, et
$Z_3$ représente —COOH, —OH, —$NH_2$ ou —NH-alkyle comportant 1 à 4 atomes de carbone) avec un polymère comportant des motifs récurrents de structure:

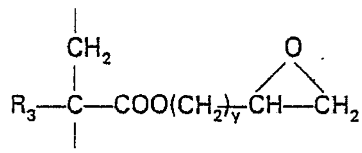
ou
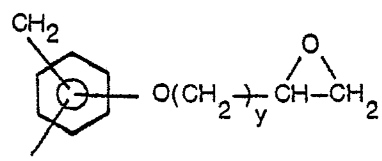

et l'on transforme les polymères, dans lesquels M représentent l'ion hydrogène, éventuellement en des sels selon la définition, $R_3$ et y ayant le sens indiqué pour la formule II et les composés de formules IVa, IVb ou IVc étant utilisés selon un rapport compris entre 1:10 et 1:1, de préférence entre 3:10 et 1:1, par rapport au nombre total des motifs récurrents de la structure du polymère.

11. Procédé selon la revendication 9, pour produire un polymère selon la revendication 1 ou 4, lequel présente des motifs récurrents de structure de formules II ou III (dans lesquelles

R représente

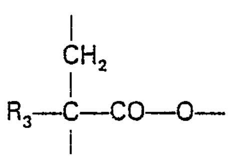
ou
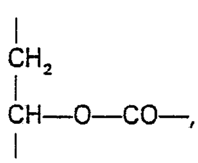

$R_1$ représente

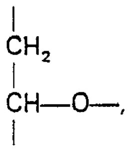

et $R_3$ a le sens indiqué pour la formule II), procédé caractérisé en ce qu'on polymérise, éventuellement en présence de comonomères à insaturation éthylénique, un composé de formule Va

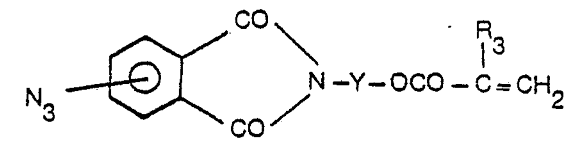

(Va),

de formule Vb

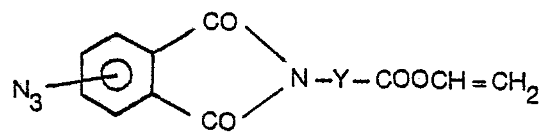

(Vb)

ou de formule Vc

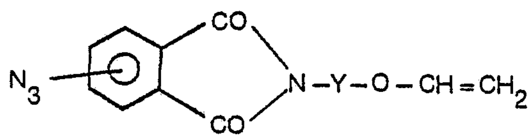

(Vc)

(dans lesquelles Y et $R_3$ ont le sens indiqué pour la formule II), le rapport molaire entre le composé de formule Va, Vb ou Vc et les comonomères compris entre 1:10 et 1:0, de préférence entre 3:10 et 1:0, et la polymérisation étant effectuée de préférence par voie radicalaire en solution.

12. Procédé selon la revendication 11, caractérisé en ce qu'on utilise comme comonomère un comonomère de formule VI:

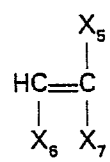

(VI)

dans laquelle $X_5$, $X_6$ et $X_7$ ont le sens indiqué à la revendication 7.

13. Application d'un polymère selon l'une quelconque des revendications 1 à 7, et/ou obtenu selon l'une des revendications 8 à 12, pour l'obtention d'images ou de clichés.